# EUROPÄISCHE PATENTSCHRIFT

(11) **EP 3 256 542 B1**
(45) Veröffentlichungstag und Bekanntmachung des Hinweises auf die Patenterteilung: **06.07.2022**
(21) Anmeldenummer: 16704604.4
(22) Anmeldetag: 12.02.2016
(51) Int. Cl.: C09K 3/10

(54) **DICHTMASSE AUF BASIS VON MERCAPTOTERMINIERTEM BASISPOLYMER/EPOXIDVERBINDUNG UND VERFAHREN ZUM HÄRTEN MITTELS EINES PHOTOLATENTEN KATALYSATORS**
SEALING MASS BASED ON MERCAPTO-TERMINATED BASE POLYMER/EPOXY COMPOUND AND METHOD FOR HARDENING BY MEANS OF A PHOTOLATENT CATALYST
MATIÈRE D'ÉTANCHÉITÉ À BASE DE COMPOSÉ ÉPOXY/POLYMÈRE DE BASE À TERMINAISON MERCAPTO ET PROCÉDÉ DE DURCISSEMENT AU MOYEN D'UN CATALYSEUR PHOTOLATENT

(30) Priorität: 13.02.2015 DE 102015202619
(43) Veröffentlichungstag der Anmeldung: 20.12.2017
(73) Patentinhaber: Chemetall GmbH, 60487 Frankfurt am Main (DE)
(72) Erfinder: BONS, Peter, 61203 Reichelsheim (DE); REICHERT, Swetlana, 60316 Frankfurt am Main (DE); SIEVERS, Björn, 60326 Frankfurt (DE); KRALEV, Miroslav, 63456 Hanau (DE)
(74) Vertreter: BASF IP Association
(86) Internationale Anmeldenummer: PCT/EP2016/053006
(87) Internationale Veröffentlichungsnummer: WO 2016/128548

(56) Entgegenhaltungen:
- WO-A1-2016/090221
- WO-A2-2013/151893
- DE-A1- 10 108 136
- US-A- 2 858 291
- US-A1- 2013 137 817
- US-A1- 2014 378 650

## Beschreibung

Die Erfindung betrifft eine Dichtmasse auf Basis von mercaptoterminiertem Basispolymer/Epoxidverbindung sowie ein Verfahren zum Härten dieser Dichtmasse auf einem Substrat mittels eines photolatenten Katalysators. Hierbei können insbesondere metallische Substrate oder beschichtete metallische Substrate, aber auch Substrate aus anderen Werkstoffgruppen beschichtet werden. Dichtmassen dienen hierbei auch zum Verbinden und/oder Verkleben von (Konstruktions-)Elementen sowie zum Abdichten und/oder zum Verfüllen von Hohl- und/oder Zwischenräumen von (Konstruktions-)Elementen.

Bei der Erfindung handelt es sich um ein 2-Komponentensystem, bestehend aus Grundmasse und Härter.

Im Folgenden wird der Begriff "(ungehärtete) Grundmasse" zur Bezeichnung eines Gemischs verwendet, das noch nicht mit einem Härter angemischt ist.

Hingegen soll der Begriff "Dichtmasse" zum einen ein Gemisch aus einer Grundmasse und einem Härter bezeichnen, das nach dem Anmischen mit einem Härter als ungehärtet oder als schon in Härtung begriffen zum Einsatz - d.h. insbesondere für das Beschichten eines Substrats - vorbereitet ist, zum anderen aber auch ein ausgehärtetes Gemisch aus einer Grundmasse und einem Härter - etwa auf einem Substrat.

Grund- und Dichtmassen werden für die unterschiedlichsten Zwecke eingesetzt. Sie sind vor allem für die Luft- und Raumfahrt von Interesse, aber auch überall dort, wo aufgrund einer größeren Menge an Grund- bzw. Dichtmasse auf eine schnelle Aushärtung besonders geachtet werden muss wie z.B. auch bei Landfahrzeugen. Sie dienen insbesondere zum Abdichten von Konstruktionselementen, zum Verbinden z.B. von Blechen mit vorhandenen Strukturen wie z.B. Segmenten eines Flugzeugs und/oder zum Korrosionsschutz an Stellen, wo z.B. im Bereich von Bohrungen die Korrosionsschutzschichten der metallischen Elemente verletzt oder entfernt werden. Sie können vorübergehend auch eine tragende Funktion z.B. während des Transports von im Aufbau befindlichen Strukturen übernehmen, die nachträglich noch mit dauerhaften tragenden Verbindungselementen ausgestattet werden.

Besondere Anforderungen werden an Grund- und Dichtmassen für die Herstellung und Instandhaltung von Luft- und Raumfahrzeugen gestellt: Dabei stehen Abdichtung z.B. der Kraftstofftanks, Korrosionsschutz, aerodynamische Glättung und Abdichtung des Druckrumpfes, die Elastizität über einen weiten Temperaturbereich, die Beständigkeit gegen verschiedene Medien wie z.B. Treibstoff, Hydraulikflüssigkeit, Kondenswasser und Enteisungsflüssigkeit sowie eine gute Dicht- und Haftwirkung auf verschiedensten Substraten im Vordergrund.

Bisher ist die Herstellung und Instandhaltung von Luft- und Raumfahrzeugen mit einer großen Zahl an Verbindungsstellen mit Dichtmassen außerordentlich aufwändig, da die bisher eingesetzten Dichtmassen, insbesondere solche mit einer langen Verarbeitungszeit, eine sehr lange Zeit für die vollständige Aushärtung erfordern.

Der Nachteil bei den bekannten Dichtmassen und Verfahren für ihre Verarbeitung und Aushärtung liegt darin, dass bei einer gegebenen einzuhaltenden Verarbeitungszeit zu wenig Katalysator in die Dichtmasse eingebracht werden kann, um die Aushärtung im gewünschten Maße zu beschleunigen. Dies führt insbesondere bei langen Verarbeitungszeiten dazu, dass die Dichtmassen aufgrund ihrer damit verbundenen langen Aushärtungszeiten Arbeitsprozesse stark verzögern. Eine schnelle Durchhärtung ist aber auch bei Dichtmassen mit langer Verarbeitungszeit erforderlich.

Die heute eingesetzten schnell härtenden Dichtmassen mit einer Verarbeitungszeit von 30 Minuten, die mercaptoterminierte Basispolymere enthalten, erreichen innerhalb von ca. 180 Minuten eine Shore A-Härte von 30. Diese Vorgabe wird nur bei besonderen Dichtmassenzusammensetzungen erreicht.

Dabei besteht auch das Problem, dass bei den zweikomponentigen und vorzugsweise raumtemperaturhärtenden Dichtmassen die Zeit zum Erreichen der klebfreien Zeit und die Durchhärtezeit erheblich länger als die Verarbeitungszeit sind - siehe Tabelle 1. Die konventionellen Beschichtungsverfahren sind daher oft mit außerordentlich langen Taktzeiten in der Produktion verbunden - siehe Tabelle 2.

Als Kriterium für einen gewissen Grad der Aushärtung kann die Zeit bis zum Erreichen einer Shore A-Härte von 30, welche nach ISO 7619-1 oder ISO 868 (Durometer-Verfahren) bestimmt wird, verwendet werden. Außerdem ist die klebfreie Zeit als Maß für die an der Dichtmassenoberfläche beginnende Härtung der Dichtmasse von großer Bedeutung. Daher soll die Verarbeitungszeit möglichst lang und die klebfreie Zeit und die Durchhärtezeit möglichst kurz sein. Bei diesen Parametern wird meist von der Verarbeitungszeit ausgegangen, während die klebfreie Zeit und die Durchhärtezeit mit dem Dichtmassentyp im Wesentlichen festgelegt werden. Tabelle 1 definiert die bei der Aushärtung von Dichtmassen wichtigen Zeitparameter. Tabelle 2 gibt eine Übersicht über typische Zeiten bei der Aushärtung von Dichtmassen mit mercaptoterminiertem Basispolymer nach dem Stand der Technik und im Vergleich zur Erfindung.

**Tabelle 1: Begriffserläuterung der für die Dichtmassen relevanten Verarbeitungszeiten nach DIN 65262-1, ISO 868 und ISO 7619-1**

| Begriff | Definition |
|---|---|
| Verarbeitungszeit | Zeitspanne ab dem Anmischen von Grundmasse und Härter bzw. Aushärtungsbeginn bis die Dichtmasse aufgrund des Viskositätsanstiegs nicht mehr applizierbar ist (DIN 65262-1, Abschnitt 3.1.2.3). |
| Klebfreie Zeit | Zeitspanne ab dem Anmischen von Grundmasse und Härter bzw. Aushärtungsbeginn bis zum Erreichen einer klebfreien Oberfläche der Dichtmasse (DIN 65262-1, Abschnitt 3.1.2.5). |
| Durchhärtezeit | Zeitspanne ab dem Anmischen von Grundmasse und Härter bzw. Aushärtungsbeginn bis zum Erreichen einer Anfangshärte Shore A 30 (DIN 65262-1, Abschnitt 3.1.2.6; ISO 868; ISO 7619-1). |

**Tabelle 2: Übersicht über Trends und ausgewählte typische Zeiten bei der Aushärtung von konventionellen Dichtmassen nach dem Stand der Technik (bei Raumtempratur aushärtende epoxygehärtete Polythioetherdichtmassen und mangandioxidgehärtete Polysulfiddichtmassen) und nach der Erfindung für mercaptoterminiertes Basispolymer**

| Begriff Zeit in [min] | konventionelle Dichtmassen | | | erfindungsgem. Dichtmassen | | |
|---|---|---|---|---|---|---|
| Verarbeitungszeit | 10-15 | ca. 25-35 | ca. 120 | 10-15 | ca. 25-35 | ca. 120 |
| Klebfreie Zeit | 30-120 | 90-600 | 480-840 | 0,01-5 | 0,01-5 | 0,01-10 |
| Durchhärtezeit | 60-240 | 150-1800 | 540-2880 | 10-60 | 20-120 | 40-420 |

Außerdem benötigen die konventionellen Dichtmassen der Typen A und B, die üblicherweise flächig oder in Form einer Raupe zum Beschichten von Bolzen, Nieten oder anderen Konstruktionselementen verwendet werden, bei einer Verarbeitungszeit von 30 Minuten typischerweise 1,5 bis 5 Stunden, um klebfrei zu werden, und typischerweise 2,5 bis 8 Stunden bis zum Erreichen der Shore A-Härte von 30. Bei Zwischenlagendichtmassen (Klasse C) kann ausgequetschtes Material mit UV-Licht gehärtet werden.

Mit der vorliegenden Erfindung kann der Zeitaufwand erheblich reduziert werden durch die viel kürzere klebfreie Zeit und durch die viel kürzere Durchhärtezeit bei gleichzeitig ausreichend langer Verarbeitungszeit. Hierdurch kann der Zeittakt für die weitere Verwendung der mit Dichtmasse beschichteten Komponenten deutlich verkürzt werden.

Die Problematik der konventionellen hochwertigen zweikomponentigen Dichtmassen auf Basis von mercaptoterminiertem Basispolymer besteht darin, dass ein vergleichsweise hoher Gehalt an freiem Katalysator benötigt wird, um eine schnelle Durchhärtung und eine schnelle klebfreie Zeit zu erzielen. Dabei verringert sich die Verarbeitungszeit der Dichtmasse proportional zur Verringerung der klebfreien Zeit sehr.

Als Kriterium für die mechanische Belastbarkeit einer in der Aushärtung befindlichen, langsamer aushärtenden Dichtmasse wird häufig neben oder anstatt der Zugscherfestigkeit eine Shore A-Härte von mindestens 35 oder sogar nur von 30 herangezogen, bei der sich die Dichtmasse nicht mehr plastisch verformen lässt und nicht mehr z.B. beim Transport verschmiert wird. Eine typische Shore A-Härte für eine vollständig ausgehärtete Dichtmasse liegt häufig bei 45 +/- 10.

DE 101 08 136 A1 beschreibt schnell härtende Dichtmassen mit einer langen Verarbeitungszeit. Es werden dort Temperatur, IR-Strahlung oder mechanische Kräfte als Auslöser für die schnelle Härtung sowie verkapselte oder deaktivierte Katalysatoren verwendet, um die Verarbeitungszeit möglichst lang zu halten.

US 3,645,816 beschreibt ein Verfahren für die Abdichtung von Lecks in Flüssigkeitstanks z.B. unter Verwendung von Polysulfiddichtmasse, wobei zur Beschleunigung der Aushärtung die Erwärmung der Dichtmasse auf eine Temperatur von 60 bis 65 °C empfohlen wird, um eine besonders schnelle klebfreie Zeit und Aushärtung zu erzielen, die jedoch nur bei bestimmten Dichtmassen genutzt werden können. Ein Erwärmen von großen oder schwer zugänglichen Substraten ist jedoch sehr schwierig.

US 2013/0137817 A1 beschreibt einen Cure on Demand Dichtstoff auf Polysulfidbasis. Dabei wird ein geblockter Härter verwendet, welcher bei 60-120 °C für bis zu 2 Stunden deblockiert / aktiviert wird. Diese hohe Aktivierungstemperatur und die lange Aktivierungszeit sind für die meisten im Flugzeugbau verwendeten Substrate (z.B. Aluminiumlegierungen) ungünstig wegen deren hohen Wärmeausdehnungskoeffizienten.

Es sind UV-härtbare ein- oder zweikomponentige raumtemperaturhärtende Beschichtungen bekannt, die keine Schwefel-haltigen Polymere aufweisen und die nicht die besonders hochwertigen Eigenschaften von Flugzeugdichtmassen wie z.B. hohe Beständigkeit gegen verschiedene Medien wie Treibstoff, Hydraulikflüssigkeit, Kondenswasser und Enteisungsflüssigkeit zeigen. Sie basieren meistens auf UV-härtbaren Gemischen mit Acrylat-Prepolymeren mit Doppelbindungen, die in Anwesenheit eines Photoinitiators als Radikalerzeuger radikalisch polymerisieren und aushärten können. Ohne UV-Strahlung wird bei diesen Dichtmassen jedoch keine vollständige Aushärtung erzielt.

Ein seit Jahrzehnten und bisher vergeblich gehegter Wunsch bei der Entwicklung von Grund- und Dichtmassen ist es, eine Grund- und Dichtmasse vorzuschlagen, die bei Raumtemperatur oder nur geringfügig höheren Temperaturen als Raumtemperatur eine Verarbeitungszeit von z.B. mindestens 0,5 Stunden, mindestens 1 Stunden oder sogar etwa 2 Stunden ermöglicht, ohne hierbei zum Aushärten ein Vielfaches dieser Zeit als Durchhärtezeit zu benötigen. Ein ebenso sehr lange und vergeblich gehegter Wunsch ist es, eine Grund- und Dichtmasse vorzuschlagen, die auf Befehl auszuhärten beginnt.

Es bestand die Aufgabe, eine Grund- und Dichtmasse sowie ein Verfahren zum Beschichten von Substraten mit dieser Dichtmasse mit mercaptoterminierten Polymeren vorzuschlagen, bei denen unter Beibehaltung von langen Verarbeitungszeiten möglichst kurze Aushärtungszeiten erreicht werden. Für den Einsatz im Bereich der Luft- und Raumfahrt soll die Dichtmasse nach Möglichkeit die gleichen hochwertigen Eigenschaften erzielen können wie die dafür verwendeten konventionellen Dichtmassen. Zu diesen Eigenschaften gehören die hohe Beständigkeit gegen verschiedene Medien wie z.B. Treibstoffbeständigkeit bei Raumtemperatur, bei 60 °C und bei 100 °C, Hydraulikflüssigkeit, Kondenswasser und Enteisungsflüssigkeit, die hohe Temperaturbeständigkeit, die hohe Kälteflexibilität, die hohe Witterungsbeständigkeit, der hohe Schälwiderstand auf unterschiedlichen Substraten, die hohe Bruchdehnung und die hohe Zugfestigkeit.

Außerdem bestand die Aufgabe, eine Grund- und Dichtmasse insbesondere für die Luftfahrtindustrie vorzuschlagen, deren Härtung möglichst "auf Befehl" einsetzt. Im Falle eines fehlenden Befehls ist es gegebenenfalls auch vorteilhaft, wenn die Dichtmasse dennoch vollständig, wenn auch verlangsamt, aushärtet.

Es wurde jetzt gefunden, dass es möglich ist, Grundmassen und Dichtmassen herzustellen, die auf Befehl gehärtet werden können. Es wurde jetzt auch gefunden, dass es möglich ist, Grundmassen und Dichtmassen herzustellen, die nach einer Bestrahlung mit energiereicher aktinischer Strahlung eine sehr kurze klebfreie Zeit haben und die eine Durchhärtezeit aufweisen können, die etwa in der Größenordnung der Verarbeitungszeit liegt (siehe obige Tabelle 2), so dass beim Bau von Flugzeugen kürzere Wartezeiten und Taktzeiten möglich sind und dass somit die Produktivität gesteigert werden kann. Es wurde jetzt ferner gefunden, dass diese Grund- und Dichtmassen etwa die gleichen hochwertigen Eigenschaften aufweisen wie die konventionellen Grund- und Dichtmassen für die Luft- und Raumfahrtindustrie, insbesondere eine hohe Treibstoffbeständigkeit besitzen sowie hochelastisch sind.

Zudem weisen die erfindungsgemäßen Dichtmassensysteme den Vorteil auf, dass eine Härtung in nicht-bestrahlten Bereichen, in sogenannten "Schattenbereichen", der Dichtmasse erfolgen kann und dass eine Nachhärtung erfolgt, so dass trotz zu kurzer Bestrahlungszeit und/oder bei unvollständiger Bestrahlung über den Dichtmassenauftragsbereich eine vollständige Aushärtung erreicht werden kann.

Das erfindungsgemäße Verfahren ist dadurch gekennzeichnet ist, dass die Aushärtung der Dichtmasse auf Befehl erfolgt und dass sie so schnell erfolgt, dass eine klebfreie Oberfläche der Dichtmasse ab Bestrahlungsbeginn in einer klebfreien Zeit von < 15 Minuten erreicht wird. Der Aushärtungsbeginn einer Dichtmasse fällt in einer bevorzugten Ausführungsform mit dem Beginn der energiereichen aktinischen Bestrahlung zusammen. Vorzugsweise beträgt die klebfreie Zeit < 10 Minuten, < 5 Minuten, < 3 Minuten oder < 10 Sekunden. Die dabei erzielten Durchhärtezeiten liegen je nach Schichtdicke im Bereich von 1 bis 1.000 Minuten, bevorzugt 10 bis 360 Minuten und besonders bevorzugt 20 bis 90 Minuten.

Daher kann bei den Grund- und Dichtmassen der vorliegenden Erfindung von einem neuen Typ von Dichtmassen gesprochen werden, der insbesondere für Flugzeuge geeignet ist, der eine relativ lange Verarbeitungszeit aufweist und der erst auf Befehl stärker zu härten beginnt, dann aber stark beschleunigt aushärtet. Denn diese Massen sind besonders schnell klebfrei.

Die Aufgabe wird gelöst durch eine Dichtmasse zum Beschichten eines Substrats, welche eine Mischung aus einer überwiegend ungehärteten Grundmasse, d.h. einer Grundmasse mit einer Viskosität von < 2500 Pa · s, und einem Härter mit einem Gehalt an mindestens einer Epoxidverbindung ist, wobei die Grundmasse ein mercaptoterminiertes Basispolymer auf Basis von Polyether, Polythioether, Polythioethersulfid, Polysulfid, deren Copolymeren und/oder deren Mischungen enthält, die Grundmasse, der Härter oder beide mindestens einen Photoinitiator auf Basis einer sterisch gehinderten stickstoffhaltigen organischen Base enthalten, und der mindestens eine Photoinitiator beim Einwirken von energiereicher aktinischer Strahlung mindestens ein Radikal pro Molekül auf Basis einer stickstoffhaltigen organischen Base abspaltet, aus dem eine stickstoffhaltige organische Base mit einem pKs-Wert der konjugierten Säure im Bereich von 6 bis 30 gebildet wird, welche als aktiver Katalysator für die Härtung der Grundmasse wirkt.

Der pKs-Wert der konjugierten Säure der stickstoffhaltige organische Base, welche als aktiver Katalysator für die Härtung der Grundmasse wirkt, liegt bevorzugt im Bereich von 7 bis 28, weiter bevorzugt von 8 bis 26, besonders bevorzugt im Bereich von 9 bis 20 und ganz besonders bevorzugt von 10 bis 15.

Bei dem mindestens einen Photoinitiator auf Basis einer sterisch gehinderten stickstoffhaltigen organischen Base handelt es sich vorzugsweise um ein sterisch gehindertes tertiäres Amin, ein sterisch gehindertes Amidin und/oder ein sterisch gehindertes Guanidin. Entsprechend spaltet der mindestens eine Photoinitiator beim Einwirken von energiereicher aktinischer Strahlung mindestens ein Radikal pro Molekül auf Basis eines tertiären Amins, Amidins und/oder Guanidins ab.

Außerdem bezieht sich die vorliegende Erfindung auf ein Verfahren zum Beschichten eines Substrats mit der soeben beschriebenen Dichtmasse, wobei ein Substrat mit der Dichtmasse beschichtet wird, die Dichtmasse mit energiereicher aktinischer Strahlung bestrahlt wird und die Dichtmasse anschließend aushärtet.

Hierbei kann es sich auch um ein Verfahren zum Verbinden von Elementen, zum Abdichten und/oder zum Verfüllen von Hohl- und/oder Zwischenräumen von Elementen mit einer Dichtmasse sowie zum Herstellen einer ausgehärteten Dichtmasse handeln. Unter Elementen werden hierbei insbesondere Konstruktionselemente verstanden.

Die Viskosität der Grund- und Dichtmasse kann auch so gering sein, dass es möglich ist, sie auf das Substrat mittels geeigneter Ausstattung zu spritzen.

Es wird keine erhöhte Temperatur benötigt, um den erfindungsgemäßen Photoinitiator zu aktivieren oder den hieraus gebildeten Katalysator als Katalysator zum Einsatz zu bringen, sondern nur eine energiereiche aktinische Strahlung wie z.B. UV-Licht.

Auch das ist einer der Vorteile der vorliegenden Erfindung, dass bei Raumtemperatur oder bei nur geringfügig höherer Temperatur als Raumtemperatur wie z.B. bei Temperaturen im Bereich von 10 bis 40 oder von 15 bis 30 °C gehärtet werden kann.

Beim Einwirken von energiereicher aktinischer Strahlung kann mindestens ein erfindungsgemäß verwendeter Photoinitiator mindestens ein Radikal pro Molekül auf Basis einer stickstoffhaltigen organischen Base abspalten, das insbesondere durch H-Aufnahme - z.B. im Falle von tertiärem Amin - und/oder H-Abgabe - z.B. im Falle von Amidin - aktiviert wird und insbesondere als Katalysator für die Härtung wirkt. Hierbei ist es bevorzugt, dass der Photoinitiator beim Einwirken von energiereicher aktinischer Strahlung ein tertiäres Amin, Amidin und/oder Guanidin freisetzt und/oder bildet und dass das freigesetzte und/oder gebildete Amin, Amidin oder Guanidin die Reaktion zwischen mercaptoterminiertem Basispolymer mit Epoxid-basiertem Härter katalysiert. Besonders bevorzugt ist, dass der Photoinitiator die Reaktion von Epoxidverbindung mit Mercaptan auslöst und/oder beschleunigt, wenn die Dichtmasse einer energiereichen aktinischen Strahlung ausgesetzt wird.

Es wurde jetzt ebenfalls gefunden, dass schnell und auf Befehl härtende Dichtmassen mit hochwertigen Eigenschaften aus mercaptoterminierten Basispolymeren und geeigneten Additiven hergestellt werden können, wenn eine Epoxidhärtung gewählt wird und wenn Photoinitiatoren vorzugsweise in einer Menge zugesetzt werden, die bei energiereicher aktinischer Bestrahlung mindestens ein Radikal auf Basis von tertiärem Amin und/oder Amidin und/oder Guanidin pro Molekül freisetzen und hierbei vorzugsweise einen Anteil im Bereich von 0,05 bis 5 Gew.-% oder im Bereich von 0,1 bis 4 Gew.-% oder im Bereich von 1 bis 3 Gew.-% an tertiärer Amin- und/oder Amidin- und/oder Guanidin-Verbindung in Bezug auf die gesamte Zusammensetzung der erfindungsgemäßen Dichtmasse bzw. im Bereich von 0,2 bis 23 mmol oder im Bereich von 0,45 bis 18,3 mmol oder im Bereich von 4,5 bis 14 mmol an tertiärer Amin- und/oder Amidin- und/oder Guanidin-Verbindung pro 100 g Grundmasse bilden. Dieser Anteil an tertiärem Amin bzw. Amidin bzw. Guanidin ist offenbar ausreichend, um als Katalysator selbst z.B. etwa 7 mm dicke Schichten, Raupen oder Wülste von Dichtmassen aushärten zu lassen.

Beim Einwirken von energiereicher aktinischer Strahlung auf die Dichtmasse und/oder auf die bereits aushärtende Dichtmasse wird von mindestens einem Photoinitiator bei seiner Aufspaltung mindestens ein Radikal pro Molekül auf Basis von tertiärem Amin und/oder Amidin und/oder Guanidin freigesetzt. Hierbei wird der Photoinitiator nicht wie sonst für eine radikalische Härtung wie z.B. von Acrylaten und Methacrylaten genutzt, sondern um eine chemische Reaktion von Epoxidverbindung mit den mercaptoterminierten "Basispolymeren", ausgewählt aus Polymeren und/oder Copolymeren, in Form einer Polyaddition auszulösen. Denn Acrylate und Methacrylate und andere organische Polymersysteme des Standes der Technik haben eine Vielzahl von Doppelbindungen, die bei den mercaptoterminierten Basispolymeren der vorliegenden Anmeldung üblicherweise fehlen. Außerdem wird bei der radikalischen Härtung von (Meth)acrylat vorwiegend oder nur das Benzoyl-Radikal benötigt, während bei der Härtung der mercaptoterminierten Basispolymere das aus dem tertiären Amin-Radikal gebildete tertiäre Amin bzw. das aus dem Amidin-Radikal gebildetete Amidin bzw. das aus dem Guanidin-Radikal gebildete Guanidin benötigt wird, während das Benzoyl-Radikal bei dem erfindungsgemäßen Verfahren nicht benötigt wird.

Die mercaptoterminierten Basispolymere lassen sich bei den Verfahren nach dem Stand der Technik nach Kenntnis des Anmelders nicht ohne Anteile von Verbindungen oder Gruppen mit Doppelbindungen wie z.B. auf Basis von (Meth)acrylat mit einem Photoinitiator radikalisch polymerisieren. Üblicherweise werden jedoch solche Anteile mit Doppelbindungen der erfindungsgemäßen Grund- bzw. Dichtmasse nicht zugegeben, so dass dann entsprechend der Kenntnis des Anmelders keine radikalische Härtung stattfinden kann.

Die chemische Zusammensetzung von vielen UV-härtbaren Beschichtungen des Standes der Technik basiert auf Acrylaten, deren Vernetzung durch Einstrahlung von UV-Licht ausgelöst wird, insbesondere bei Anwesenheit von Photoinitiatoren. Bei größeren Schichtdicken kann das UV-Licht jedoch nur teilweise in solche Beschichtungen eindringen, so dass ein Aushärten von Schichtdicken z.B. größer als 200 µm in der Praxis nicht praktikabel ist.

Die vorliegende Erfindung hingegen basiert auf der Ausnutzung der chemischen Reaktion von Epoxidgruppen mit Mercaptogruppen in Anwesenheit von tertiärem Amin und/oder Amidin und/oder Guanidin, das offenbar als Katalysator dieser Reaktion wirkt. Dabei ist es möglich, auch weit größere Schichtdicken der Dichtmasse als 200 µm durchzureagieren und z.B. Schichtdicken von etwa 7 mm auszuhärten, weil sich das vom Photoinitiator freigesetzte und dann zum katalytisch aktiven Amin und/oder Amidin und/oder Guanidin umgebildete Amin bzw. Amidin bzw. Guanidin offenbar über eine größere Entfernung durch die Dichtmasse verteilen kann. Außerdem kann durch Einsatz eines zusätzlichen, freien Katalysators, der vorzugsweise eine freie stickstoffhaltige organische Base mit einem pKs-Wert der konjugierten Säure im Bereich von 6 bis 30, besonders bevorzugt ein freies tertiäres Amin und/oder freies Amidin und/oder freies Guanidin ist, in der Dichtmasse eine schnelle Tiefenhärtung wie bei einer konventionellen Dichtmasse erfolgen.

Unter "Tiefenhärtung" wird dabei eine Härtereaktion verstanden, welche nicht an der Oberfläche der UV-härtbaren Dichtmasse durch direkte Einstrahlung von UV-Licht ausgelöst wird, sondern welche mehrere Millimeter unter der Dichtmassenoberfläche einsetzt. Die Tiefenhärtung hängt ab von der Auswahl der Füllstoffe und anderer Additive, welche u.a. die Farbe der Dichtmasse beeinflussen. In der Regel findet bis 2 mm die Oberflächenhärtung statt, darunter die Tiefenhärtung.

Da in dieser Tiefe kein direktes UV-Licht einstrahlen kann, wird ein zusätzlicher freier Katalysator eingesetzt, der diese Tiefenhärtung unterstützt. Je nach Wahl des freien Katalysators kann die Verarbeitungszeit und die Durchhärtezeit an den Anwendungsfall angepasst werden.

Bei der vorliegenden Erfindung handelt es sich um eine chemische Härtung, wobei der erfindungsgemäße Photoinitiator zweckentfremdet wird und üblicherweise nur für das Freisetzen des Amin- und/oder Amidin- und/oder Guanidin-Radikals und für das Bilden eines Katalysators auf Basis von tertiärem Amin bzw. Amidin bzw. Guanidin verwendet wird, aber nicht als Photoinitiator im sonst genutzten eigentlichen Sinn.

Vorzugsweise wird dem chemischen System keine oder nahezu keine Wärme von außen zugeführt, sondern die Dichtmasse härtet ab dem Einwirken von energiereicher aktinischer Strahlung vorwiegend oder gänzlich im Temperaturbereich von 10 bis 40 °C oder von 15 bis 30 °C aus. Eine Temperatur oberhalb von 40 °C wird in dem erfindungsgemäßen Verfahren nur selten bereitgestellt oder erzeugt. Ein Vorteil des erfindungsgemäßen Verfahrens ist, dass keine erhöhten Temperaturen erforderlich sind. Außerdem könnten Temperaturen über 80 °C gegebenenfalls aufgrund der thermischen Ausdehnung Spannungen im Bauteil erzeugen und die Qualität der benachbarten Komponenten wie Aluminiumlegierungen und Faserverbundwerkstoffe beeinträchtigen. Eine Erwärmung auf mehr als 40 °C oder sogar auf mehr als 60 °C wird meistens - wenn überhaupt - nur aufgrund der aktinischen Bestrahlung und der gegebenenfalls exothermen chemischen Reaktionen üblicherweise nur für eine Zeit im Bereich von etwa 1 bis 15 Minuten erreicht. Die Aushärtung erfolgt vorzugsweise bei Temperaturen im Bereich von 10 bis 40 °C, von 15 bis 30 °C, wobei in einzelnen Fällen auch über eine Zeit von nur 0,1 bis 15 Minuten eine Temperatur über 40 °C und bis 50 °C genutzt wird. Besonders bevorzugt wird die ganze Zeit im Bereich von 15 bis 30 °C ausgehärtet. Hierbei erfolgt die Aushärtung besonders bevorzugt die meiste Zeit oder gänzlich bei Temperaturen unter 30 °C.

Die erfindungsgemäße Grund- bzw. Dichtmasse weist bevorzugt mindestens einen Photoinitiator auf, der eine Verbindung auf Basis von mindestens einer tertiären Aminogruppe und/oder einer Amidinogruppe und/oder einer Guanidinogruppe ist, die sterisch gehindert ist. Die erfindungsgemäßen Photoinitiatoren können unterschiedliche Strukturen aufweisen.

Im Unterschied zu den bekannten Dichtmassensystemen, bei denen die Härtung mit Isocyanaten oder Vinylverbindungen erwirkt wird, funktioniert das hier neu beschriebene System mit Katalysatoren wie z.B. Acetophenonen, 1-Hydroxycyclohexylphenylketon, 2-Hydroxy-2-methyl-1-phenylpropan-1-on, 2,4,6-Trimethylbenzoyldiphenylphosphinoxid, 2-Dimethylamino-2-(4-methyl-benzyl)-1-(4-morpholin-4-yl-phenyl)-butan-1-on), 2-Benzyl-2-dimethylamino-1-(4-morpholinophenyl)-1-butanon nicht.

Diese Katalysatoren sind zu schwach basisch. Die erfindungsgemäß eingesetzten Photoinitiatoren sind daher photolatente stark basische Stickstoffverbindungen. Der pKs-Wert der konjugierten Säure der freigesetzten stickstoffhaltigen organischen Base beträgt entsprechend 6 bis 30, bevorzugt 7 bis 28, weiter bevorzugt 8 bis 26, besonders bevorzugt 9 bis 20 und ganz besonders 10 bis 15. Vorzugsweise ist oder wird der Photoinitiator ausgewählt aus solchen auf Basis von sterisch gehindertem Amin und/oder Amidin und/oder Guanidin, der beim Einwirken von energiereicher aktinischer Strahlung ein tertiäres Amin und/oder ein Amidin und/oder ein Guanidin freisetzt und/oder bildet. Bevorzugt sind Photoinitiatoren, die bei energiereicher aktinischer Bestrahlung 1, 2 oder 3 tertiäre Amin-Radikale bzw. Amidin-Radikale bzw. Guanidin-Radikale abspalten und/oder mindestens eine Verbindung mit 1, 2 oder 3 tertiären Aminogruppen bzw. Amidinogruppen bzw. Guanidinogruppen pro Molekül bilden.

Der erfindungsgemäße Photoinitiator ist gegebenenfalls ein latenter Katalysator, bei dem der aktive Katalysator erst freigesetzt bzw. gebildet wird. Aber solche Photoinitiatoren können gegebenenfalls auch vor einer energiereichen aktinischen Bestrahlung eine sehr geringe katalytische Wirkung aufweisen.

Der erfindungsgemäße Photoinitiator gehört vorzugsweise zur Klasse der Amidine und/oder tertiären Amine und/oder Guanidine. Denn der chemische Aufbau dieser Photoinitiatoren erlaubt das Freisetzen eines Amidin-Radikals und/oder Amin-Radikals und/oder Guanidin-Radikals und das Bilden eines Amidins und/oder tertiären Amins und/oder Guanidins nach energiereicher aktinischer Bestrahlung, das die Reaktion zwischen dem mercaptoterminierten Polymer und dem Epoxid-basierten Härter startet und/oder beschleunigt. Auf diese Weise ist eine Verarbeitungszeit der erfindungsgemäßen Dichtmasse nach dem Anmischen der beiden Komponenten für eine Zeit oft im Bereich von 15 Minuten bis 4 Stunden gewährleistet, vorzugsweise von 20 Minuten bis 2 Stunden oder von 30 Minuten bis 1 Stunde - solange keine Bestrahlung mit energiereicher aktinischer Strahlung erfolgt. Die Dichtmasse ist insoweit eine ungehärtete Mischung, dass keine starke Härtung über die Zeit der Herstellung und Lagerung der Dichtmasse und ihrer Ausgangsmassen eingesetzt hat.

Wenn die Grundmasse bzw. Dichtmasse einer energiereichen aktinischen Bestrahlung ausgesetzt wird, führt dies zu einer Härtung "auf Befehl", zu einer besonders schnellen Oberflächenhärtung, die durch die klebfreie Zeit angegeben wird, und zu einer schnellen Durchhärtung. Hierbei wird zuerst außen eine klebfreie Schicht gebildet, der eine schnelle Härtung in die Tiefe folgt. Hierbei werden oft Zeiten im Bereich von 0,01 bis 5 Minuten bei der klebfreien Zeit und 1 bis 1.000 Minuten bei der Durchhärtung je nach Schichtdicke erzielt. Hierbei werden für Dichtmassen mit einer zu durchstrahlenden Dicke von 1 mm oft Zeiten im Bereich von 0 bis 5 Minuten bei der klebfreien Zeit und 1 bis 30 Minuten bei der Durchhärtung erzielt. Hierbei werden oft Zeiten für Dichtmassen mit einer zu durchstrahlenden Dicke von 4 mm im Bereich von 0 bis 5 Minuten bei der klebfreien Zeit und 10 bis 120 Minuten bei der Durchhärtung erzielt. Hierbei werden oft Zeiten für Dichtmassen mit einer zu durchstrahlenden Dicke von 7 mm im Bereich von 0 bis 5 Minuten bei der klebfreien Zeit und 20 bis 240 Minuten bei der Durchhärtung erzielt.

Der Photoinitiator kann als Bestandteil der Grundmasse und/oder des Härters enthalten sein. Der Photoinitiator ist daher auch Bestandteil der Dichtmasse, die für den Einsatz vorbereitet ist. Der Photoinitiator dient vorzugsweise als latenter Katalysator, der das tertiäre Amin und/oder Amidin und/oder Guanidin bereitstellt, das als Katalysator wirkt.

Gemäß einer besonders bevorzugten Ausführungsform ist mindestens ein Photoinitiator eine Verbindung auf Basis eines sterisch gehinderten Amidins, vorzugsweise photolatentes 1,8-Diazabicyclo[5.4.0]undec-7-en (DBU; siehe Formel I) und/oder 1,5-Diazabicyclo[4.3.0]non-5-en (DBN; siehe Formel II). Als sterisch gehinderte Verbindung trägt das im freien Amidin doppelt gebundene Stickstoffatom einen Substituenten R. Dieser Substituent R kann eine unterschiedliche Struktur besitzen. Er kann z.B eine Alkylgruppe oder eine Phenylgruppe umfassen. Kombinationen verschiedener organischer Reste, kurz- oder langkettig, verzweigt oder linear, sind im Substituenten R denkbar.

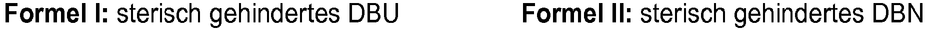

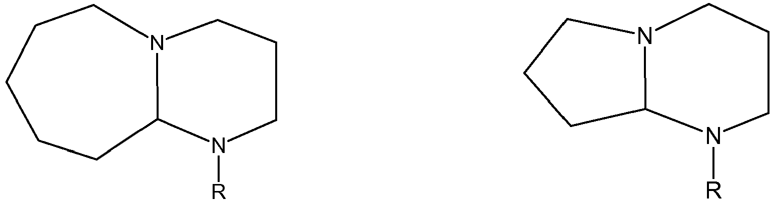

Wird die sterisch gehinderte Verbindung energiereicher aktinischer Strahlung ausgesetzt, so zerfällt es in das Amidinradikal und das Radikal bestehend aus der Substituentengruppe R. Das Amidinradikal nimmt daraufhin ein H-Atom auf und wandelt sich zum reaktiven Amidin.

Desweiteren ist es bevorzugt, einen Photoinitiator einzusetzen, welcher auf sterisch gehindertem tertiärem Amin basiert. Ein geeignetes sterisch gehindertes Amin könnte z.B. Triethylendiamin (1,4-Diazabicyclo[2.2.2]octan) basieren.

Außerdem ist es bevorzugt, einen Photoinitiator einzusetzen, welcher auf sterisch gehindertem Guanidin basiert. Ein geeignetes sterisch gehindertes Guanidin könnte z.B. auf geblocktem photolatentem TMG (Tetramethylguanidin) basieren.

Sehr wichtig ist, dass sowohl die nach Bestrahlung mit UV-Licht freigesetzten tertiären Amine als auch Amidine als auch Guanidine starke Basen sind und die pKs-Werte ihrer konjugierten Säuren 6 bis 30, bevorzugt 7 bis 28, weiter bevorzugt 8 bis 26, besonders bevorzugt 9 bis 20 und ganz besonders bevorzugt 10 bis 15 betragen. Vor Bestrahlung mit UV-Licht sind die pKs-Werte der entsprechenden sterisch gehinderten Verbindungen deutlich niedriger, bevorzugt < 9,5.

Die tertiären Amine, Amidine und Guanidine dienen hierbei als Katalysator, während die freigesetzten Substituenten bei den mercaptoterminierten Polymersystemen üblicherweise nicht stören, aber auch keine positive Wirkung entfalten. Die Aufnahme von Wasserstoff in das Radikal kann beispielsweise aus den Wasserstoffgruppen der anwesenden Polymere und/oder anderer anwesender organischer Verbindungen erfolgen. Die gebildeten tertiären Amine bzw. Amidine bzw. Guanidine weisen üblicherweise eine höhere Basizität als der Photoinitiator auf und wirken offenbar als Katalysator. Die höhere Basizität des neu gebildeten tertiären Amins und / oder Amidins und/oder Guanidins im Vergleich zur Basizität des Photoinitiators ist grundsätzlich über den pKₛ-Wert der jeweiligen konjugierten Säure messbar. Die höhere Basizität hat den Vorteil und/oder die Wirkung, dass die Reaktion zwischen Mercaptan und Epoxidverbindung beschleunigt wird und dass die Dichtmasse besonders schnell aushärtet.

Die zuletzt genannten Photoinitiatoren werden nach dem Stand der Technik in Acrylat basierten UV-härtbaren Beschichtungen eingesetzt. Sie lösen dabei in der vorliegenden Erfindung auch überraschenderweise die Reaktion von Epoxidverbindung mit Mercaptan aus und/oder beschleunigen sie, wenn die Dichtmasse einer energiereichen aktinischen Strahlung wie z.B. UV-Licht ausgesetzt wird. Es war überraschend, dass ein Photoinitiator, der vergleichsweise geringe Mengen an tertiärem Amin-Radikal und/oder Amidin-Radikal freisetzt, ausreichende Mengen an tertiärer Amin- bzw. Amidin-Verbindung mit katalytischer Aktivität für die Aushärtung von Grundmassen bereitstellt.

Vorzugsweise ist der Photoinitiator dabei photolatentes DBN und/oder photolatentes DBU, gegebenenfalls in Gegenwart von mindestens einem Photosensibilisator wie Benzophenon und/oder Thioxanthonen. Diese photolatenten Basen setzen deutlich stärkere Basen als viele andere Photoinitiatoren frei und führen daher zu einer besonders effektiven Katalyse der Reaktion zwischen Mercaptan- und der Epoxidgruppen.

Eine besonders effektive Tiefenhärtung der Dichtmasse lässt sich zudem erzielen, indem als Photoinitiator eine Kombination aus mindestens einem photolatenten, d.h. sterisch gehindertem tertiärem Amin und/oder Amidin und/oder Guanidin, bevorzugt DBN und/oder DBU, und mindestens einem nicht photolatenten, d.h. freien tertiären Amin und/oder Amidin und/oder Guanidin, bevorzugt N-Methylmorpholin, 1,4-Dimethylpiperazin, 2,2'-Dimorpholinodiethylether, Tris-(Dimethylaminomethyl-phenol), Triethylendiamin und/oder TMG, besonders bevorzugt Triethylendiamin und/oder TMG eingesetzt wird.

Außerdem können auch Photosensibilisatoren eingesetzt werden. Grundsätzlich kann hierbei jeder Photosensibilisator eingesetzt werden, der das Absorptionsspektrum in den gewünschten Wellenlängenbereich der zu nutzenden Strahlung und insbesondere in den UV-A Bereich verschiebt. Denn der UV-A-Bereich ist für größere Schichtdicken besonders geeignet, und UV-A-Strahlung verursacht keine Ozon-Bildung. Im Vergleich zu Photoinitiatoren verschieben die Photosensibilisatoren das Absorptionsspektrum beispielsweise vom kurzwelligen UV-Bereich von UV-C 200-280 nm und/oder UV-B 280-315 nm zum langwelligen UV-Bereich von UV-A 315-380 nm.

Daher können auch Mischungen von Photosensibilisatoren und Photoinitiatoren in vorteilhafter Weise verwendet werden, um die Absorptionswellenlänge(n) der Grundmasse bzw. Dichtmasse mit Hilfe von mindestens einem Photosensibilisator spezifisch einzustellen. Die verwendeten Photosensibilisatoren sind bevorzugt Photoinitiatoren, die kein tertiäres Amin sowie kein Amidin bzw. kein Guanidin freisetzen, aber die Absorptionswellenlängen in für die jeweilige Anwendung geeigneter Weise einstellen helfen. Beispiele hierfür sind Gemische z.B. ausgewählt aus mindestens einem Photosensibilisator ausgewählt aus Benzophenon und Isopropylthioxanthon ITX mit mindestens einem Photoinitiator auf Basis von sterisch gehindertem tertiären Amin wie z.B. Triethylendiamin und/oder auf Basis von sterisch gehindertem Guanidin wie z.B. TMG und/oder auf Basis von sterisch gehindertem Amidin wie z.B. DBN und/oder DBU.

Das Härten erfolgt durch chemische Reaktion der Mercaptogruppen mit den Epoxid-gruppen, wobei mindestens ein Hydroxythioether, Hydroxythioethersulfid und/oder Hydroxysulfid gebildet wird. Aufgrund der Abspaltung des Radikals vom Photoinitiator entfällt die sterische Hinderung. Erst durch die H-Aufnahme - im Falle von tertiärem Amin - bzw. Abgabe - im Falle von Amidin - bildet sich aus dem Radikal der wirksame Katalysator, der eine erhöhte Basizität besitzt und nicht mehr sterisch gehindert ist.

Bei dem erfindungsgemäßen Verfahren wird mit dem Photoinitiator nicht das Freisetzen von Radikalen wie bei einer radikalischen UV-Härtung genutzt, sondern nur die Entstehung eines Amins und/oder Amidins und/oder Guanidins, welche von der Bildung eines Radikals begleitet sein kann, ohne dass dies einen Einfluss auf den Härtungsprozess hat. Das freigesetzte tertiäre Amin- bzw. Amidin- bzw. Guanidin-Radikal bildet hieraus durch Wasserstoffaufnahme bzw. -abgabe ein tertiäres Amin bzw. Amidin bzw. Guanidin - ohne dass es besonderer Maßnahmen bedarf -, das hierbei zum katalytischen Auslösen und/oder zur katalytischen Beschleunigung der chemischen Reaktion zwischen Epoxidgruppen und Mercaptogruppen bei der chemischen Härtung dient. Das gebildete tertiäre Amin bzw. Amidin bzw. Guanidin löst die Reaktionen zwischen den Komponenten der Grundmasse und des Härters aus und/oder beschleunigt sie. Es kann offenbar grundsätzlich bei niedrigen und bei höheren Temperaturen als Katalysator für die Härtung mit der mindestens einen Epoxidverbindung wirken. Der Photoinitiator scheint dabei wie ein latenter Katalysator zu wirken. Nach der Abspaltung des Amin- bzw. Amidin- bzw. Guanidin-Radikals vom Photoinitiator, nach der Bildung einer Amin- bzw. Amidin- bzw. Guanidin-Verbindung und auch nach der Katalyse des Härtungsprozesses liegt das Amin bzw. Amidin bzw. Guanidin weiterhin frei vor und wirkt auch nach dem Ende der energiereichen aktinischen Bestrahlung katalytisch weiter, so dass üblicherweise sogar eine katalytische Nachhärtung erfolgt. Bei der katalytischen Nachhärtung setzt sich das Härten der Dichtmasse auch nach dem Ende der energiereichen Einstrahlung fort. Das ist im Vergleich zum Härten mit Acrylat-basierten Zusammensetzungen offenbar etwas Besonderes.

Durch das Einwirken von energiereicher aktinischer Strahlung wird die chemische Reaktion zwischen Basispolymer und Härter mithilfe des latenten Katalysators ausgelöst und/oder beschleunigt. So ist ein Beginn des Härtens auf Befehl ("on demand") möglich. Der Befehl erfolgt durch die energiereiche aktinische Bestrahlung wie z.B. mit einer UV-Strahlung. Somit ist es möglich, den Zeitpunkt des Beginns der Aushärtung vorgeben zu können und den Beginn der Aushärtung auslösen zu können.

Eine aktinische Bestrahlung wie eine UV-Bestrahlung kann grundsätzlich über 1 Sekunde bis 6 Stunden erfolgen. Sie erfolgt vorzugsweise je nach Schichtdicke und/oder je nach Strahlungsquelle über einen Zeitraum von 1 Sekunde bis 15 Minuten, wobei grundsätzlich auch längere Bestrahlungszeiten genutzt werden können. Üblicherweise reicht eine aktinische Bestrahlung im Zeitraum von 5 Sekunden bis 2 Minuten, wenn eine UV-Strahlungsdosis von mindestens 1 J/cm² genutzt wird. Arbeitet man mit einer UV-LED-Lampe, welche eine Wellenlänge von 365 nm freisetzt, so ist bei einer Intensität von 0,05 bis 1,5 W/cm² eine Strahlungsdosis von 1 bis 20 J/cm² bevorzugt, besonders bevorzugt ist bei einer Intensität von 0,2 bis 1,2 W/cm² eine Strahlungsdosis von 3 bis 16 J/cm². Arbeitet man mit einer UV-LED-Lampe, welche eine Wellenlänge von 395 nm freisetzt, so ist bei einer Intensität von 0,05 bis 1,5 W/cm² eine Strahlungsdosis von 3 bis 20 J/cm² bevorzugt, besonders bevorzugt ist bei einer Intensität von 0,1 bis 1,2 W/cm² eine Strahlungsdosis von 6 bis 17 J/cm². Verwendet man eine Quecksilberdampflampe, welche ein Spektrum von verschiedenen Wellenlängen aussetzt, so ist bei einer Intensität von 0,10 bis 1,5 W/cm² eine Strahlungsdosis von 1 bis 25 J/cm² bevorzugt, besonders bevorzugt ist bei einer Intensität von 0,20 bis 1,0 W/cm² eine Strahlungsdosis von 4 bis 20 J/cm².

Die folgende Tabelle 3 stellt den oben beschriebenen Zusammenhang zwischen verwendeter Wellenlänge, Strahlungsintensität und Strahlungsdosis nochmals dar.

**Tabelle 3: Bevorzugte und besonders bevorzugte Strahlungsintensitäten und -dosen**

| Verwendete UV-Lampe | Strahlungsintensität (W/cm²) | Strahlungsdosis (J/cm²) |
|---|---|---|
| UV-LED-Lampe mit 365 nm | 0,05 - 1,50 | 1 - 20 |
| UV-LED-Lampe mit 365 nm | 0,2 - 1,20 | 3 - 16 |
| UV-LED-Lampe mit 395 nm | 0,05 - 1,50 | 3 - 20 |
| UV-LED-Lampe mit 395 nm | 0,1 - 1,20 | 6 - 17 |
| Quecksilberdampflampe | 0,1 - 1,50 | 1 - 25 |
| Quecksilberdampflampe | 0,2 - 1,0 | 4 - 20 |

In vielen Ausführungsformen erfolgt nach der Bestrahlung, aber auch ohne vorherige Bestrahlung mit einer energiereichen aktinischen Strahlung eine katalytische Nachhärtung, die oft über mehrere Stunden oder mehrere Tage andauert. Die katalytische Nachhärtung kann in einer besonderen Ausführungsform durch einen zusätzlichen, nicht sterisch gehinderten Katalysator gefördert werden. Diese katalytische Nachhärtung sichert daher unabhängig davon, ob, wo und wieviel an aktivem Katalysator gebildet wird, dass die Dichtmasse im Einsatz, insbesondere an schwer oder nicht für die Strahlung zugänglichen Stellen, immer eine hohe Qualität erreicht.

Als energiereiche aktinische Strahlung kann insbesondere eine UV-Strahlung verwendet werden, aber auch alternativ oder zusätzlich hierzu eine Elektronenstrahlung. Diese Strahlungsarten haben sich bewährt, weil sie den Energiebereich umfassen, der zum Aktivieren des Photoinitiators benötigt wird, insbesondere UV-Licht mit UVC- , UVB-, UVA- und/oder UV/VIS-Strahlung. Hierzu kann mindestens ein UV-Strahler wie z.B. mindestens ein leistungsfähiger UV-Strahler vorzugsweise mit einer Leistung größer 400 W, mindestens ein leistungsarmer UV-Strahler mit Leistungen kleiner 120 W und/oder mindestens eine UV-LED, mindestens ein Fluoreszenzstrahler für UV-Strahlung und/oder mindestens ein Elektronenstrahler verwendet werden. Wenn im UV-A Bereich gearbeitet wird, entsteht kein Ozon, und außerdem ist auch das Härten größerer Schichtdicken wie z.B. etwa von 2 bis 7 mm möglich.

Der Einfachheit wird im Folgenden oft nur von UV-Licht bzw. UV-Strahlung gesprochen, ohne diese auf solche Wellenlängen einzuschränken. In der Praxis wird jedoch UV-Licht am ehesten eingesetzt werden.

Im Vergleich zu konventionellen Dichtmassen ohne energiereiche aktinische Bestrahlung und ohne diese katalysierte Reaktion wird die erfindungsgemäße Reaktion erheblich beschleunigt. Das Auslösen der Reaktion durch energiereiche Strahlung ist durch die sehr schnelle, u.U. sekundenschnelle, Oberflächenhärtung erkennbar. Die Beschleunigung der Reaktion ist an der beschleunigten Durchhärtung erkennbar.

Bei dem erfindungsgemäßen Verfahren kann die Dichtmasse eine Shore A-Härte von mindestens 10, gemessen 5 bis 600 Minuten nach Beginn der energiereichen aktinischen Bestrahlung und/oder eine Shore A-Härte im Bereich von 30 bis 60, gemessen 2 Wochen nach Beginn der energiereichen aktinischen Bestrahlung, aufweisen. Die deutliche Zunahme der Härte erfolgt auch aufgrund der Nachhärtung bis zur vollständigen Durchhärtung. Je nach Gehalt an Photoinitiator und an freiem tertiärem Amin bzw. freiem Amidin bzw. freiem Guanidin kann hierbei die Schnelligkeit gesteuert werden: Je höher diese Gehalte sind, desto schneller kann das Härten erfolgen.

Überraschenderweise ist mit dem gefundenen Dichtmassen-System auch die Aushärtung größerer Schichtdicken möglich. Denn die Epoxid-Mercaptan-Reaktion wird bereits durch sehr geringe Mengen eines Katalysators, insbesondere eines tertiären Amins und/oder Amidins und/oder Guanidins, stark beschleunigt, so dass auch schon geringe Mengen an energiereicher aktinischer Strahlung zum Freisetzen eines Amin- bzw. Amidin- bzw. Guanidin-Radikals und zum Bilden entsprechender Amin- bzw. Amidin- bzw. Guanidin-Spuren ausreichen.

Hierbei kann die chemische Zusammensetzung der Grundmasse(n) sowie die chemische Zusammensetzung der aushärtenden Dichtmasse so gewählt werden, dass die energiereiche aktinische Strahlung wie z.B. ein UV-Licht hierin nur in geringem Maß absorbiert wird. Üblicherweise sind die Hauptkomponenten einer Grundmasse oder Dichtmasse für energiereiche aktinische Strahlung gut durchlässig. Insbesondere bei den Füllstoffen sollte vorzugsweise darauf geachtet werden, dass sie möglichst gut für die ausgewählte Strahlung durchlässig sind. Elektronenstrahlen dringen üblicherweise viel stärker als UV-Licht durch die Substanzen einer Grundmasse oder Dichtmasse durch. Daher ist es bevorzugt, beim Zusetzen von Füllstoffen und weiteren Additiven zu einer der Massen solche ausgewählt werden, die insbesondere die gewählte Art z.B. des UV-Lichts wenig oder nicht absorbieren oder die UV-Licht wenig oder nicht absorbieren, also für die gewählte Art der Strahlung möglichst durchlässig sind, mit der die Härtung eingeleitet werden soll. Sie weisen vorzugsweise keine oder kaum eine Absorption im Bereich des UV-Lichtspektrums oder des für die Einstrahlung genutzten UV-Lichts auf. Füllstoffe werden üblicherweise einer Dichtmasse zugesetzt, um bessere mechanische Eigenschaften zu erzielen. Insbesondere Füllstoffe auf Basis von Calciumcarbonat und von Mikrohohlkugeln aus Glas oder Kunststoff sollten bei Bedarf auf ihre Strahlendurchlässigkeit geprüft werden.

Daher ist es bevorzugt, dass keine Stoffe oder nur bis zu 1 Gew.-% oder nur bis zu 5 Gew.-% an Stoffen wie z.B. Füllstoffen der Grundmasse und dem Härter zugesetzt werden, die im Bereich der einzusetzenden energiereichen aktinischen Strahlung eine deutliche Absorption oder eine Absorption deutlich über der Absorption der Schwefel-haltigen Polymere der Grundmasse aufweisen.

Ein weiterer großer Vorteil der Erfindung besteht darin, dass nach dem Start des Aushärtens auch ohne Einstrahlung von UV-Licht eine zuverlässige und vollständige Aushärtung erreicht wird, wenn auch erst nach langer Zeit wie z.B. nach 1 bis 21 Tagen. Dies ist wichtig für Anwendungen, bei denen die Dichtmasse in Hohlräume und/oder in Spalte zwischen Komponenten eingebracht wird und/oder anderweitig z.B. gegen UV-Licht abgeschirmt ist. Insbesondere bei der Herstellung von Flugzeugen ist es wichtig, dass bei jeder Anwendung eine möglichst vollständige Aushärtung der gesamten eingebrachten Grundmasse mit dem Härter erreicht wird.

Die erfindungsgemäße Grundmasse bzw. Dichtmasse enthält mindestens ein schwefelhaltiges, mercaptoterminiertes Basispolymer auf Basis von Polyether, Polythioether, Polysulfid, deren Copolymeren und/oder deren Mischungen.

Ganz besonders bevorzugt ist eine Grundmasse auf Basis von Polythioether mit endständigen Mercaptogruppen und gegebenenfalls Polysulfid mit endständigen Mercaptogruppen.

Gemäß einer bevorzugten Ausführungsform basiert die Grundmasse im Wesentlichen auf mindestens einer flüssigen Polythioether-Verbindung, die an den Enden der Moleküle jeweils eine Mercaptogruppe tragen. Die Polythioether können dabei gegebenenfalls bis zu etwa 50 mol-% Disulfidgruppen innerhalb des Moleküls enthalten. Man kann dann auch von Polythioethersulfiden sprechen. Bevorzugte Verbindungen dieser Art werden in der WO 2015/014876 A2 beschrieben und weisen die folgende Struktur auf. 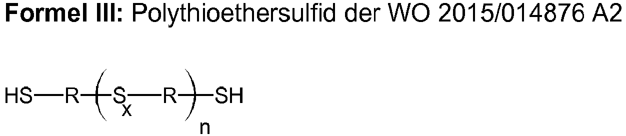
x = 1,0 - 1,5
R = -(CH₂)ₚ-O-(CH₂)_{q}-O-(CH₂)ᵣ-, 0-20 % der R-Gruppen können zudem verzweigte Alkandiylgruppen bzw. Arendiylgruppen tragen.
n= 1-60
q, p, r = 1-10

Gemäß einer weiteren bevorzugten Ausführungsform ist in der Grundmasse zusätzlich zu der mindestens einen flüssigen Polythioether-Verbindung mindestens eine disulfidhaltige Verbindung wie z.B. mindestens ein Polysulfid in einem Anteil an der Grundmasse von bis zu 80 Gew.-% enthalten.

Als mercaptoterminierte Polythioetherpolymere und/oder Polythioethersulfidpolymere werden in den erfindungsgemäßen Zusammensetzungen der Grundmasse und der daraus hergestellten Dichtmasse vorzugsweise flüssige Polymere mit einem Molekulargewicht insbesondere im Bereich von 500 bis 6000 g/mol eingesetzt, besonders bevorzugt mit einem Molekulargewicht im Bereich von 900 bis 5000 g/mol. Bei diesen mercaptoterminierten Polythioetherpolymeren und/oder Polythioethersulfidpolymere kann es sich um einfach oder mehrfach verzweigte Moleküle handeln.

Als mercaptoterminierte Polysulfidpolymere werden in den erfindungsgemäßen Zusammensetzungen der Grundmasse und der daraus hergestellten Dichtmasse vorzugsweise langkettige Polymere mit einem Molekulargewicht insbesondere im Bereich von 2500 bis 6000 g/mol wie z.B. Thioplast^{®} G131 verwendet, besonders bevorzugt mit einem Molekulargewicht im Bereich von 3300 bis 5000 g/mol wie z.B. Thioplast^{®} G10, Thioplast^{®} G12, Thioplast^{®} G1, Thiokol^{®} LP 32 und/oder Thiokol^{®} LP 12. Auch bei diesen mercaptoterminierten Polysulfidpolymeren kann es sich um einfach oder mehrfach verzweigte Moleküle handeln.

Als mercaptoterminierte Polysulfidpolymere werden in den erfindungsgemäßen Zusammensetzungen der Grundmasse, der Dichtmasse und der daraus hergestellten Dichtmasse - gegebenenfalls zusätzlich - kurzkettige Polymere mit einem Molekulargewicht insbesondere im Bereich von 500 bis 2500 g/mol, besonders bevorzugt im Bereich von 700 bis 2000 g/mol und ganz besonders bevorzugt im Bereich von 800 bis 1200 g/mol wie z.B. Thiokol^{®} LP3, Thioplast^{®} G4, Thioplast^{®} G22 oder Thioplast^{®} G44 eingesetzt.

In einer bevorzugten Ausführungsform werden als mercaptoterminierte Polysulfidpolymere und/oder als mercaptoterminierte Polythioether und/oder als mercaptoterminierte Polythioethersulfide in den erfindungsgemäßen Zusammensetzungen der Grundmasse, der Dichtmasse und der daraus hergestellten Dichtmasse vorzugsweise einerseits langkettige Polymere mit einem Molekulargewicht insbesondere im Bereich von 2500 bis 6000 g/mol, besonders bevorzugt im Bereich von 3300 bis 5000 g/mol und andererseits kurzkettige Polymere mit einem Molekulargewicht insbesondere im Bereich von 500 bis 2500 g/mol, besonders bevorzugt im Bereich von 800 bis 1500 g/mol eingesetzt, wobei das Verhältnis der langkettigen Polymere zu den kurzkettigen Polymeren vorzugsweise im Bereich von 25 : 1 bis 0,5 : 1, von 20 : 1 bis 2 : 1 oder von 14 : 1 bis 8 : 1 liegt.

Als mercaptoterminierte Polyetherpolymere werden in den erfindungsgemäßen Zusammensetzungen der Grundmasse und der daraus hergestellten Dichtmasse vorzugsweise flüssige Polymere mit einem Molekulargewicht insbesondere im Bereich von 100 bis 7000 g/mol oder von 500 bis 6000 g/mol eingesetzt, besonders bevorzugt mit einem Molekulargewicht im Bereich von 1000 bis 3000 g/mol, die entsprechend auch in der daraus hergestellten Dichtmasse vorliegen.

Das Molekulargewicht kann durch GPC (Gelpermeationschromatographie) gegen Polystyrol-Standards und/oder Polyethylen-Standards bestimmt werden. Hierbei werden die Moleküle der Polymerprobe in mehreren hintereinandergeschalteten Säulen, welche mit porösem Material gefüllt sind, nach ihrem Molekulargewicht aufgetrennt und z.B. mithilfe eines Brechungsindex-Detektors, Viskositätsdetektors und/oder Lichtstreudetektors identifiziert. Als mobile Phase kann z.B. THF (Tetrahydrofuran) verwendet werden.

Das Molekulargewicht kann aber auch über NMR-Spekroskopie (Kernspinresonanz-Spekroskopie) bestimmt werden.

Die schwefelhaltigen Basispolymere weisen vorzugsweise einen Mercaptangehalt bezogen auf die reaktiven SH-Gruppen zum gesamten Basispolymer im Bereich von 0,5 bis 10 Gew.-%, von 0,8 bis 8 Gew.-% oder von 1,2 bis 7 Gew.-% auf.

Der Mercaptangehalt der Polymere kann dabei durch direkte Titration der SH-terminierten Polymere mit lodlösung bestimmt werden. Dazu werden die Polymere in einem Lösemittelgemisch bestehend aus 40 Vol.-% Pyridin und 60 Vol.-% Benzol gelöst und unter Rühren mit benzolischer lodlösung titriert, bis eine schwache Gelbfärbung bestehen bleibt.

Die schwefelhaltigen Basispolymere weisen vorzugsweise einen Gesamt-Schwefelgehalt im Bereich von 1 bis 50 Gew.-%, von 5 bis 45 Gew.-% oder von 12 bis 36 Gew.-% auf.

Vorzugsweise weisen die schwefelhaltigen Basispolymere eine mittlere Funktionalität als reaktive Endgruppen von Mercaptogruppen pro Molekül im Bereich von 1,5 bis 2,5 oder von 1,9 bis 2,2 auf.

Die Funktionalität gibt die durchschnittliche Anzahl der Mercaptogruppen pro Molekül an. Sie wird berechnet als Quotient aus Molekulargewicht : Äquivalentgewicht und lässt sich über NMR bestimmen.

Vorzugsweise weisen die schwefelhaltigen Basispolymere eine mittlere Glasübergangstemperatur T_{g} im Bereich von -80 bis -30 °C oder von -60 bis -40 °C auf, gemessen nach AITM 1-0003 Airbus Industrie Test Method Juni 1995.

Mit wachsendem Schwefelgehalt verbessert sich die Treibstoffbeständigkeit. Das Basispolymer und/oder die jeweilige Basispolymer enthaltende Zusammensetzung wie die Grundmasse und/oder die Dichtmasse können neben mercaptoterminierten Polymeren/Copolymeren gegebenenfalls auch 0 oder 0,001 bis 10 oder 0,01 bis 5 Gew.-% an deren Oligomeren enthalten, insbesondere solche ausgewählt aus den kurzkettigen organischen Sulfiden und/oder aus den kurzkettigen organischen Thioethern. Diese kurzkettigen Moleküle können zu einer Quervernetzung und/oder Änderung der Viskosität des Basispolymers beitragen.

Die erfindungsgemäße Zusammensetzung ist entweder eine Grundmasse, bei der der Härter zum Einsatz noch zuzumischen ist, oder eine einkomponentige Dichtmasse, bei der der Grundmasse ein Härter zugemischt ist, wobei die einkomponentige Zusammensetzung zumindest für eine lange Aufbewahrungsdauer vorzugsweise eingefroren werden kann. Hauptbestandteil des Dichtmassen-Systems bzw. der Zusammensetzung ist ein aus mindestens zwei Komponenten bestehendes System aus einer ungehärteten Grundmasse und einem Härter auf Epoxid-Basis und die daraus durch Zusammenmischen hergestellte einkomponentige Dichtmasse bzw. Dichtmasse. Hierbei enthalten alle Grundmassen bzw. Dichtmassen mindestens eine Art eines mercaptoterminierten Basispolymers. Sie enthalten vorteilhafterweise jeweils mindestens ein mercaptoterminiertes Basispolymer auf Basis von Polysulfid, ein mercaptoterminiertes Basispolymer auf Basis von Polythioether und/oder ein mercaptoterminiertes Basispolymer auf Basis von Polythioethersulfid und/oder ein mercaptoterminiertes Basispolymer auf Basis von Polysulfid und Polythioether, die auch als Polymermischung und/oder als Copolymer wie z.B. als Blockcopolymer vorliegen können. Das Dichtmassen-System, die ungehärtete Grundmasse, der Härter und/oder die Dichtmasse zeichnen sich dadurch aus, dass es/sie/er mindestens einen Photoinitiator enthält, der tertiäres Amin und/oder ein Amidin und/oder ein Guanidin freisetzt und/oder bildet und dass das freigesetzte und/oder gebildete Amin bzw. Amidin bzw. Guanidin die Härtung mit einem mindestens eine Epoxidverbindung enthaltenden Härter katalysiert.

Es ist bevorzugt, dass die Grundmasse und/oder Dichtmasse frei ist/sind:
- von (Meth)acrylat-basierten Verbindungen/Polymeren,
- von Metall-basierten Katalysatoren,
- von allen weiteren Arten von Polyenen, von organischen Polymeren und von organischen Copolymeren mit Doppelbindungen mit Ausnahme von Silanen wie z.B. Vinylsilanen, Acrylsilanen und Methacrylsilanen,
- von Vinyl-haltigen Polymeren/Copolymeren,
- von mehr als 5 Gew. % an Silan-/Siloxan-terminierten Basispolymeren,
- von UV-Licht stark absorbierenden Substanzen wie z.B. UV-Licht absorbierende Pigmente wie z.B. TiO₂.

Je nach Ausführungsform können die Grundmassen und/oder Dichtmassen frei von allen oder etlichen der oben genannten Gehalte und Zusätze sein.

Der Härter ist bei diesem neuen Dichtmassen-System Epoxid-basiert und ist üblicherweise frei von Manganoxid, anorganischem und organischem Peroxid, Vinylverbindungen und Isocyanaten, wenn keine Co-Härtung beabsichtigt ist. Dies gilt insbesondere dann, wenn nur die mindestens eine Epoxidverbindung als Härtungsreagenz eingesetzt wird. Im Falle einer Co-Härtung kann es dennoch sinnvoll sein, wenn gleichzeitig mindestens eine weitere dieser Härtungsreagenzien ausgewählt aus Manganoxid, anorganischem und organischem Peroxid, Vinylverbindung und Isocyanat neben der mindestens einen Epoxidverbindung eingesetzt wird, insbesondere bei gleichzeitigem Einsatz von Epoxid mit Isocyanat oder von Epoxid mit Manganoxid. Die Epoxidverbindungen werden vorzugsweise nur dem Härter zugesetzt. Daher erfolgt die Härtung der Dichtmasse mit mindestens einer Epoxid-basierten Verbindung.

Im Folgenden wird die mindestens eine Epoxid-basierte Verbindung teilweise undifferenziert als "Epoxidverbindung" bezeichnet, unabhängig davon, ob es sich um Monomere, Oligomere, Polymere und/oder Copolymere handelt. Im Sinne der vorliegenden Anmeldung bedeutet der Begriff "Epoxidverbindung" jeweils mindestens eine aliphatische, und/oder aromatische Epoxidverbindung, welche monofunktionell und/oder multifunktionell ist und auf einem Monomer, Oligomer und /oder Polymer basiert. Hierbei wird mindestens eine solche Epoxid-basierte Verbindung aus dieser Gruppe ausgewählt. Der Begriff "Epoxidverbindung" umfasst dabei auch Epoxidgruppen ganz allgemein.

Alle diese Epoxidverbindungen sind vorzugsweise miteinander mischbar, da sie vorzugsweise alle flüssig vorliegen. Unter diesen Epoxidharzen gibt es auch bei Raumtemperatur feste Epoxidharze, die man schmelzen kann und in den flüssigen Epoxidharzen und/oder Reakivverdünnern "lösen" kann. Epoxid dient als Reaktionspartner insbesondere für die Mercaptogruppen des Basispolymers. Durch die Auswahl der Epoxidverbindung bzw. der Epoxidverbindungen werden die Aushärtungsbedingungen und die mechanischen Eigenschaften der Dichtmassen wesentlich beeinflusst.

Der Härter enthält mindestens eine Epoxid-basierte Verbindung. Die Epoxidverbindung wird als Härter eingesetzt. Der Härter enthält vorzugsweise mindestens eine Epoxidverbindung mit einem Gesamtgehalt an Epoxid-basierten Verbindungen im Bereich von 5 bis 100, von 30 bis 98, von 40 bis 95, von 50 bis 90 Gew.-%, von 60 bis 85 oder von 70 bis 80 Gew.-%. Hierbei ist es möglich, die gesamte gewünschte Menge an Epoxidverbindung in Form von Epoxid-terminierten Verbindungen einzusetzen.

Hierbei werden die Epoxidgruppen der Epoxidverbindung mit den Mercaptogruppen insbesondere des Basispolymers und gegebenenfalls auch mit einer kleinen Menge an anderen Verbindungen mit Mercaptan-Basis wie z.B. mit Mercaptopropyltrimethoxysilan chemisch reagieren. Eine solche Verbindung kann insbesondere in einem Gehalt von 0,1 bis 5 Gew.-% der Grundmasse oder der Dichtmasse zugesetzt sein, um die mechanischen Eigenschaften und die Haftung einzustellen.

Obwohl die Funktionalität der Epoxidverbindung grundsätzlich im Bereich von 2 bis 5 liegen kann, liegt meist eine Mischung verschiedener Funktionalitäten vor. Vorzugsweise liegt die Funktionalität der als Härter verwendeten mindestens einen Epoxidverbindung durchschnittlich im Bereich von 2,0 bis 3,0 oder von 2,2 bis 2,8. Die Epoxidverbindung ist vorzugsweise jeweils mindestens eine aliphatische und/oder aromatische Epoxidverbindung mit jeweils durchschnittlich 2 bis 3 Epoxidgruppen pro Molekül unabhängig voneinander.

Die Epoxidverbindung wird besonders bevorzugt in Form von Diglycidylethern des Bisphenol A, Diglycidylethern des Bisphenol F und aliphatischen Polyglycoldiglycidylethern und/oder Hydantoin-Epoxy-Derivaten dem Härter zugesetzt. Auch epoxid-terminierte Polythioether bzw. Polythioethersulfide und/oder epoxidierte Polysulfide können zugesetzt werden. Besonders bevorzugt wird außerdem mindestens ein Epoxy-Novolak-Harz, bevorzugt ein quervernetztes Epoxy-Novolak-Harz, eingesetzt. Es ist auch möglich, dass die Epoxidverbindung auf mehreren der oben genannten Klassen basiert, z.B. Bisphenol A/F-Epoxidharz oder Bisphenol F-Novolak-Harz. Sogenannte Reaktivverdünner (epoxyterminiert, mono- und/oder multifunktionell) können mit jeder der oben genannten Epoxidharze kombiniert werden, um z.B. Viskosität und Flexibilität einzustellen. Beispiele für Reaktivverdünner sind 1,4-Butandiol-diglycidylether, 2-Ethyl-hexyl-glycidylether, 1,6-Hexandioldiglycidylether. Generell können alle Epoxidharze miteinander kombiniert werden, je nach gewünschtem Eigenschaftsprofil, und als Härter für das mercaptoterminierte Basispolymer verwendet werden.

In einer bevorzugten Ausführungsform weist der Härter als chemische Basis mindestens ein Epoxid-terminiertes Polysulfid-Polymer und / oder Polythioetherpolymer und/oder Polythioethersulfidpolymer ohne endständige Mercaptogruppen auf, das als Härter und nicht als Basispolymer dient. Dieses Polymer liegt vorzugsweise als flüssiges oder hochviskoses Polymer mit einem Epoxid-Äquivalentgewicht insbesondere im Bereich von 200 bis 800 g/eq vor.

Hierbei wurde überraschenderweise festgestellt, dass insbesondere Epoxidverbindungen auf Basis von Epoxy-Novolak-Harzen, wie z.B. DEN 431, DEN 438, DEN 439 und/oder auf Basis von Bisphenol A-Epoxidharzen und/oder Bispenol F-Epoxidharzen, z.B. DER 354, DER 331, jeweils in Kombination mit einem erfindungsgemäßen Photoinitiator für die Härtung insbesondere von mercaptoterminierten Polymeren unter der Wirkung von UV-Licht besonders geeignet sind. Vorzugsweise liegt das Epoxid-Äquivalentgewicht der als Härter verwendeten Epoxidverbindung im Bereich von 120 bis 700 g/eq, besonders bevorzugt im Bereich von 140 bis 400 g/eq und ganz besonders bevorzugt im Bereich von 170 bis 250 g/eq. Ein Epoxid-terminiertes Polysulfid-Polymer und/oder Polythioetherpolymer und/oder Polythioethersulfid-Polymer ohne endständige Mercaptogruppen besitzt ein Epoxid-Äquivalentgewicht insbesondere im Bereich von 200 bis 800 g/eq.

Ganz besonders bevorzugt sind Epoxidverbindungen auf Basis von Bisphenol A-Epoxidharzen mit einem Epoxid-Äquivalentgewicht im Bereich von 170 bis 200 g/eq, auf Basis von Bisphenol F-Harz mit einem Epoxid-Äquivalentgewicht im Bereich von 150 bis 180 g/eq und auf Basis von Epoxid-Novolak-Harzen mit einem Epoxid-Äquivalentgewicht im Bereich von 160 bis 220 g/eq. Je nach gewünschten Eigenschaften und konkretem Anwendungsfall können jedoch alle Epoxidharze eingesetzt werden.

Ganz besonders bevorzugt sind folgende Epoxidverbindungen:
1.) Bisphenol F-Epoxidharze wie z.B. DEN 354 (Fa. Olin Epoxy),
2.) Bisphenol A-Harze wie z.B. DER 336, DER 331 (Fa. Olin Epoxy),
3.) Bisphenol A/F-Epoxidharze wie z.B. DER 351, DER 324, DER 335 (Fa. Olin Epoxy),
4.) Epoxy-Novolak-Harze wie z.B. DEN 431, DEN 438, DEN 439 (Fa. Olin Epoxy),
5.) Epoxid-terminierte Prepolymere auf Basis von Polysulfid und/oder Polythioether wie z.B. Thioplast EPS 25 (Fa. Akzo Nobel) und
6.) Epoxyterminierte Reaktivverdünner auf Basis von Alkoholen / Glykolen wie z.B. 1,4-Butandioldiglycidylether (DER 731; Fa. Olin Epoxy), 1,6-Hexandioldiglycidylether (DER 734; Fa. Olin Epoxy), 2-Ethyl-hexyl-diglycidylether (DER 728; Fa. Olin Epoxy), C₁₂-C₁₄-glycidylether (DER 721; Fa. Olin Epoxy).

Hierbei kann es bei der Verwendung einer Epoxid-terminierten Verbindung wichtig sein, dass ein molarer Überschuss an Epoxidverbindung im Bereich von 1,05 bis 2 im Vergleich zu 1 Mol reaktiver SH-Gruppen in Bezug auf den Gesamtgehalt an mercaptoterminiertem Basispolymer zugesetzt wird.

Die Epoxidverbindung kann ein Epoxid-Äquivalentgewicht im Bereich von 120 bis 700 g/eq, im Bereich von 140 bis 400 g/eq oder von 160 bis 250 g/eq aufweisen.

Vorzugsweise liegen alle Bestandteile des Basispolymers der Grundmasse und alle Epoxid-basierten Verbindungen des Härters bei Raumtemperatur flüssig vor, sind hochviskose Flüssigkeiten/Pasten und/oder in einem organischen Lösemittel gelöste Substanzen. Dies verbessert die homogene Mischbarkeit dieser Bestandteile.

Dem Härter können Additive wie z.B. Silane zugesetzt sein. Allerdings ist es bevorzugt, dass der Härter keine cycloaliphatischen Epoxidharze wie z.B. hydrierte Bisphenol-A-diglycidylether, hydrierte Bisphenol-A-diglycidylether-Oligomere, hydrierte Bisphenol-F-diglycidylether, hydrierte Bisphenol-F-diglycidylether-Oligomere und 3,4-Epoxycyclohexylmethyl-3,4-epoxycyclohexylcarboxylat enthält. Der Härter kann frei oder im Wesentlichen frei von Wasser sein. Er ist oft frei von Weichmachern.

Vorzugsweise enthält/enthalten die Grundmasse und/oder die Dichtmasse mindestens ein Additiv ausgewählt aus der Gruppe bestehend aus Photosensibilisatoren, Füllstoffen, Leichtfüllstoffen, Thixotropiermitteln, Weichmachern, Haftvermittlern, Alterungsschutzmitteln, Flammschutzmitteln, Vernetzungsmitteln, Harzen und organischen Lösemitteln.

Aufgrund der Reaktion(en) zwischen Epoxidverbindung und den Mercaptogruppen des Basispolymers entsteht ein Netzwerk auf Basis von Hydroxythioethern und/oder Hydroxythioethersulfiden und/oder Hydroxysulfiden, das die gehärtete Dichtmasse bildet.

Die Aufgabe wird auch gelöst durch ein Dichtmassen-System und/oder eine Dichtmasse aus einer ungehärteten Grundmasse auf Basis Schwefel enthaltender Polymere und aus einem Härter mit einem Gehalt an mindestens einer Epoxidverbindung zur Herstellung und Aushärtung einer Dichtmasse, wobei die ungehärtete Grundmasse ein mercaptoterminiertes Basispolymer auf Basis von Polyether, Polythioether, Polysulfid, Polythioethersulfid, deren Copolymeren und/oder deren Mischungen enthält, wobei die ungehärtete Grundmasse, der Härter oder beide einen Photoinitiator enthalten, der beim Einwirken von energiereicher aktinischer Strahlung aktiviert werden kann und ein Amin- und/oder ein Amidin- und/oder ein Guanidin-Radikal freisetzen kann, das nach Bildung einer Amin- bzw. Amidin- bzw. Guanidin-Verbindung als Katalysator für die Härtung wirken kann oder wirkt, und wobei die Mischung aus Grundmasse und Härter, die zusammen die Dichtmasse bilden, ab dem Einwirken von energiereicher aktinischer Strahlung, dem Freisetzen eines Amin- und/oder Amidin- und/oder Guanidin-Radikals und/oder der Bildung einer Amin- und/oder Amidin- und/oder Guanidin-Verbindung härten kann und ab Beginn des Härtens als Dichtmasse bezeichnet wird. Das Dichtmassen-System bezeichnet das System aus ungehärteter Grundmasse, Härter und Dichtmasse. Die Zusammensetzungen, die Eigenschaften, die Verfahren und die Wirkungen des Dichtmassen-Systems sind daher die gleichen wie bei der ungehärteten Grundmasse, wie beim Härter und wie bei der Dichtmasse; sie werden daher nicht noch einmal erneut beschrieben.

Die Aufgabe wird ferner gelöst durch eine - insbesondere zur Aushärtung auf Befehl ("on demand") vorbereitete - ungehärtete Grundmasse auf Basis Schwefel enthaltender Polymere zur Herstellung einer Dichtmasse, die dadurch gekennzeichnet ist, dass die ungehärtete Grundmasse ein mercaptoterminiertes Basispolymer auf Basis von Polyether, Polythioether, Polythioethersulfid, Polysulfid, deren Copolymeren und/oder deren Mischungen sowie einen Photoinitiator enthält und dass der Photoinitiator beim Einwirken von energiereicher aktinischer Strahlung aktiviert wird, um nach Freisetzung eines Amin- und/oder Amidin- und/oder Guanidin-Radikals eine tertiäre Amin- bzw. Amidin- bzw. Guanidin-Verbindung als Katalysator zu bilden, die die Reaktion zwischen mercaptoterminiertem Basispolymer mit Epoxid-basiertem Härter katalysiert.

Die zur Aushärtung auf Befehl ("on demand") vorbereitete ungehärtete Dichtmasse, zeichnet sich dadurch aus, dass sie eine Mischung aus einer ungehärteten Grundmasse und aus einem Härter mit einem Gehalt an mindestens einer Epoxidverbindung ist, dass die Dichtmasse einen Photoinitiator enthält, der beim Einwirken von energiereicher aktinischer Strahlung aktiviert werden kann und ein Amin- und/oder Amidin- und/oder Guanidin-Radikal freisetzen kann, das nach Bildung einer Amin- bzw. Amidin- bzw. Guanidin-Verbindung als Katalysator für die Härtung wirkt, und dass die Dichtmasse ab dem Einwirken von energiereicher aktinischer Strahlung, Freisetzen eines Amin- und/oder Amidin- und/oder Guanidin-Radikals und Bilden einer Amin- bzw. Amidin- bzw. Guanidin-Verbindung aushärtet. Ab dem Einwirken von energiereicher aktinischer Strahlung härtet die Dichtmasse stark beschleunigt aus.

Die Aufgabe wird außerdem gelöst durch einen Härter zur Herstellung einer Dichtmasse auf Basis Schwefel enthaltender Polymere, der dadurch gekennzeichnet ist, dass der Härter einen Gehalt an mindestens einer Epoxidverbindung sowie mindestens einen Photoinitiator aufweist und dass mindestens ein Photoinitiator beim Einwirken von energiereicher aktinischer Strahlung aktiviert werden kann und ein Amin und/oder Amidin und/oder Guanidin freisetzen und/oder bilden kann, das als Katalysator für die Härtung eines mercaptoterminierten Basispolymers mit einem Epoxidverbindung enthaltenden Härter wirken kann und/oder wirkt.

Bei dem erfindungsgemäßen Dichtmassen-System, bei der erfindungsgemäßen Dichtmasse ist/wird die Härtung der ungehärteten Dichtmasse durch Bestrahlen mit einer energiereichen aktinischen Strahlung gestartet und/oder beschleunigt.

Die Aufgabe wird auch gelöst mit einem Härter, der schwefelhaltige Polymere mit einem Rückgrat auf Basis von 1.) Polythioether, 2.) Polysulfid, 3.) Polythioethersulfid 4.) Copolymeren mit einem Anteil an Polythioether und/oder mit einem Anteil an Polysulfid und/oder 5.) deren Mischungen enthält, wobei diese Polymere Epoxidterminiert sind.

Die Aufgabe wird außerdem gelöst durch ein Luftfahrzeug enthaltend Komponenten, die mit einem Dichtmassen-System und/oder mit einer erfindungsgemäßen Dichtmasse und/oder nach einem erfindungsgemäßen Verfahren beschichtet und/oder abgedichtet sind.

Die erfindungsgemäßen Grundmassen und/oder Dichtmassen können bei Bedarf zusätzlich jeweils mindestens eines der folgenden Additive enthalten:
Mischungen aus Photosensibilisatoren und/oder Photoinitiatoren in vorteilhafter Weise verwendet, um die Absorptionswellenlänge(n) der Dichtmasse spezifisch einzustellen. Der Photosensibilisator kann die Absorptionskante und/oder den Absorptionsbereich des chemischen Systems (sterisch gehindertes tertiäres Amin und/oder Amidin und/oder Guanidin) verschieben;
Füllstoff insbesondere auf Basis von Magnesiumsilicathydrat wie z.B. Talkum, auf Basis von Aluminiumhydroxid wie z.B. Al(OH)₃, auf Basis eines Feldspats, auf Basis von Quarzmehl und/oder auf Basis eines Calcium- und/oder Aluminiumsilicats, besonders bevorzugt mindestens ein Füllstoff mit einer Teilchengröße vorwiegend im Bereich von 1 bis 20 µm. Ein Zusatz an Füllstoff dient zur Verbesserung der mechanischen Eigenschaften. Als für UV-Bestrahlung geeignete Füllstoffe haben sich Calciumsilicat, Magnesiumsilicathydrat, Aluminiumsilicat, Quarzmehl und/oder Aluminiumhydroxid wie z.B. Aluminiumtrihydrat bewährt. Als für die erfindungsgemäßen Grund- und Dichtmassen eher weniger geeignet haben sich Füllstoffe erwiesen auf Basis von CaCO₃, TiO₂, Ruß und/oder BaSO₄ sowie Füllstoffe mit einem merklichen Fe-Gehalt und/oder Gehalt an weiteren Schwermetallen;
Leichtfüllstoff insbesondere auf Basis von Polyurethan einschließlich deren Copolymeren, Polyamidwachs und/oder Polyolefinwachs. Leichtfüllstoff dient auch zur Verringerung der Dichte. Alternativ oder zusätzlich können auch Hohlfüllkörper verwendet werden;
Thixotropiermittel insbesondere auf Basis von Feldspat, Kieselsäure, Sepiolith und/oder Bentonit. Thixotropiermittel dient zur Einstellung der rheologischen Eigenschaften, insbesondere für ein thixotropes Verhalten, um eine Dichtmasse standfest auftragen zu können;
Weichmacher insbesondere auf Basis eines Adipats, eines Benzoats, eines Citrats, eines Phthalats und/oder eines Terphenyls. Weichmacher dient zur Flexibilisierung der Dichtmasse. Oft kann auch auf Weichmacher verzichtet werden. Zur Flexibilisierung können auch epoxyterminierte Reaktivverdünner eingesetzt werden;
Haftvermittler insbesondere auf Basis von einem Phenolharz, von einem Resol und/oder von einem Silan/Silanol/Siloxan - hier kurz "Silan" genannt - wie z.B. auf Basis von organofunktionellem Alkoxysilan, wie z.B. Mercaptopropyltrimethoxysilan, Mercaptopropyltriethoxysilan, Glycidoxypropyltrimethoxysilan, Glycidoxypropyltriethoxysilan, Methacryloxymethyltrimethoxysilan und/oder (Methacryloxymethyl)methyldimethoxysilan, und/oder von einem Bis-silyl-Silan. Haftvermittler dient als Adhäsionspromotor zur Verbesserung der Haftung zwischen der Dichtmasse und dem Substrat. Werden Haftvermittler eingesetzt, welche Epoxidgruppen tragen, z.B. Glycidoxypropyltrimethoxysilan und Glycidoxypropyltriethoxysilan, so müssen diese in der Härterkomponente verwendet werden, da es sonst zu einer vorzeitigen Reaktion zwischen den SH-Gruppen des Basispolymers und den Epoxidgruppen kommen kann;
Alterungsschutzmittel werden insbesondere auf Basis von sterisch gehindertem Phenol, auf Basis von Phenylenamin und/oder als sogenannte Hindered Amine Light Stabilisators (HALS) wie Lichtstabilisatoren auf Basis von sterisch gehinderten Aminen eingesetzt, beispielsweise 4,6-bis (dodecylthiomethyl)-o-cresol, Ethylen-bis(oxyethylen)bis-(3-(5-tert-butyl-4-hydroxy-m-tolyl)-propionat, Thiodiethylen-bis[3-(3,5-di-tert-butyl-4-hydroxyphenyl)propionat], Pentaerythritol tetrakis(3-(3,5-di-tert-butyl-4-hydroxyphenyl)propionat) und/oder Phenylenamine wie z.B. N-Isopopyl-N'-phenyl-p-phenylenediamin. Alterungsschutzmittel dient dazu, die durch Alterungsprozesse der Polymermatrix entstandenen Radikale und/oder andere Abspaltungsprodukte abzufangen und trägt zu einer Verzögerung oder Verhinderung einer Alterung wie z.B. Vergilbung oder Versprödung der Dichtmasse bei;
Vernetzungsmittel insbesondere auf Basis von (SH-terminierten) Mercaptanen (z.B. Derivate von Mercaptocarbonsäuren von Bruno Bock / Thiocure^{®}), das vorzugsweise hilft, die mechanischen Eigenschaften weiter zu verbessern;
Flammschutzmittel insbesondere auf Basis von Phosphorsäureester, auf Basis von Ammoniumpolyphosphat, auf Basis von Melamin, auf Basis von Aluminiumhydroxid und/oder auf Basis von Magnesiumhydroxyd. Die Flammschutzmittel dienen zur Verbesserung des Brandschutzverhaltens der Dichtmasse wie z.B. zum Verzögern des Brennbeginns der Dichtmasse, zum spontanen Beenden des Brennvorgangs und/oder zum Verringern der Rauchentwicklung;
Und/oder mindestens ein organisches Lösemittel insbesondere auf Basis eines Esters und/oder Ethers wie z.B. Ethylacetat und/oder Monopropylenglykolmonomethylether. Sie vereinfachen gegebenenfalls die Vergleichmäßigung des flüssigen oder hochviskosen Gemisches. Zumeist kann auf Lösemittel jedoch verzichtet werden.

Vorzugsweise enthält die erfindungsgemäße Zusammensetzung der Grundmasse:
Ein Basispolymer mit einem Gehalt im Bereich von 30 bis 98 Gew.-%, bevorzugt im Bereich von 40 bis 95 Gew.-%, von 45 bis 90 Gew.-%, von 50 bis 85 Gew.-%, von 55 bis 80 Gew.-% oder im Bereich von 60 bis 75 Gew.-% mindestens eines mercaptoterminierten Polymers/Copolymers, gegebenenfalls einschließlich eines Gehalts an Monomeren und/oder Oligomeren von 0 oder im Bereich von 0,001 bis 20 Gew.-%, der 0 oder 0,001 bis 10 Gew.-% des Basispolymers ausmachen kann;
Gegebenenfalls mindestens einen Weichmacher mit einem Gesamtgehalt von 0 Gew.-% oder im Bereich von 0,1 bis 30 Gew.-%, von 2 bis 20 Gew.-%, von 5 bis 15 Gew.-% oder von 6 bis 10 Gew.-%;
Gegebenenfalls mindestens einen Füllstoff mit einem Gesamtgehalt von 0 Gew.-% oder im Bereich von 0,1 bis 50 Gew.-%, von 2 bis 40 Gew.-%, von 5 bis 30 Gew.-%, von 10 bis 20 Gew.-% oder von 6 bis 15 Gew.-%;
Gegebenenfalls mindestens einen Leichtfüllstoff mit einem Gesamtgehalt von 0 Gew.-% oder im Bereich von 0,1 bis 30 Gew.-%, von 3 bis 25 Gew.-%, von 5 bis 20 Gew.-% oder von 8 bis 15 Gew.-%;
Gegebenenfalls mindestens ein Thixotropiermittel mit einem Gesamtgehalt von 0 Gew.-% oder im Bereich von 0,01 bis 30 Gew.-%, von 0,01 bis 10 Gew.-%, von 0,2 bis 25 Gew.-%, von 0,5 bis 20 Gew.-%, von 1 bis 15 Gew.-%, von 0,5 bis 8 Gew.-% oder von 1,5 bis 5 Gew.-%, wobei grundsätzlich auch größere Mengen als 10 Gew.-% möglich sind, insbesondere wenn das Thixotropiermittel gleichzeitig als Füllstoff dient und für die energiereiche aktinische Strahlung ausreichend durchlässig ist, wobei es in diesem Fall bezüglich seines Gehalts nur bei den Thixotropiermitteln gezählt wird;
Gegebenenfalls mindestens einen Photoinitiator, der ein Radikal auf Basis von tertiärem Amin und/oder Amidin und/oder Guanidin freisetzen kann, mit einem Gesamtgehalt von 0 Gew.-% oder im Bereich von 0,05 bis 5 Gew.-%, von 0,1 bis 4 Gew.-%, von 0,3 bis 3 Gew.-% oder von 0,6 bis 2 Gew.-%;
Gegebenenfalls mindestens einen Photosensibilisator, der das Absorptionsspektrum der Dichtmassenformulierung verschieben kann, mit einem Gesamtgehalt von 0 Gew.-% oder im Bereich von 0,05 bis 5 Gew.-%, von 0,1 bis 4 Gew.-%, von 0,3 bis 3 Gew.-% oder von 0,6 bis 2 Gew.-%;
Gegebenenfalls mindestens einen Haftvermittler mit einem Gesamtgehalt von 0 Gew.-% oder im Bereich von 0,1 bis 10 Gew.-%, von 0,3 bis 8 Gew.-%, von 0,6 bis 6 Gew.-%, von 1 bis 5 Gew.-%, von 2 bis 4 Gew.-% oder von 1,5 bis 3 Gew.-%;
Gegebenenfalls mindestens ein Alterungsschutzmittel mit einem Gesamtgehalt von 0 Gew.-% oder im Bereich von 0,5 bis 2,5 Gew. % oder von 0,5 bis 1,5 Gew.-%;
Gegebenenfalls mindestens ein Flammschutzmittel mit einem Gesamtgehalt von 0 Gew.-% oder im Bereich von 0,5 bis 40 Gew.-% oder von 0,5 bis 10 Gew.-%;
Gegebenenfalls mindestens ein Vernetzungsmittel insbesondere auf Basis von Mercaptanen (z.B. Derivate von Mercaptocarbonsäuren von Bruno Bock / Thiocure^{®}), das vorzugsweise hilft, die mechanischen Eigenschaften weiter zu verbessern, mit einem Gesamtgehalt von 0 Gew.-% oder im Bereich von 0,1 bis 10 Gew.-% oder von 0,5 bis 6 Gew.-%;
Und gegebenenfalls mindestens ein organisches Lösemittel auf Basis eines Esters und/oder Ethers, mit einem Gesamtgehalt von 0 Gew.-% oder im Bereich von 0,1 bis 15 Gew.-% oder von 2 bis 10 Gew.-%.

Eine homogene Mischung der Grundmasse kann beispielsweise durch Verwendung eines Vakuum-Dissolvers erzielt werden.

Vorzugsweise enthält der erfindungsgemäße Härter:
Mindestens eine Epoxidverbindung mit einem Gesamtgehalt im Bereich von 20 bis 100, von 30 bis 98, von 40 bis 95, von 50 bis 90 Gew.-%, von 60 bis 85 oder von 70 bis 80 Gew.-%;
Gegebenenfalls mindestens einen Photoinitiator, der ein Radikal auf Basis von tertiärem Amin und / oder Amidin und/oder Guanidin freisetzen kann, mit einem Gesamtgehalt von 0 Gew.-% oder im Bereich von 1 bis 90 Gew.-%, im Bereich von 2 bis 50 Gew.-% oder im Bereich von 3 bis 20 Gew.-%;
Gegebenenfalls mindestens einen Photosensibilisator mit einem Gesamtgehalt von 0 Gew.-% oder im Bereich von 1 bis 90 Gew.-% oder im Bereich von 2 bis 50 Gew.-% oder im Bereich von 3 bis 20 Gew.-%;
Gegebenenfalls mindestens ein Thixotropiermittel mit einem Gesamtgehalt von 0 Gew.-% oder im Bereich von 0,01 bis 10 Gew.-% oder von 0,5 bis 5 Gew.-%. Außerdem kann es vorteilhaft sein, wenn der Härter auch ein Thixotropiermittel wie z.B. auf Basis von pyrogener Kieselsäure enthält, da sich dieses als gutes Mittel für die Einstellung der Fließeigenschaften des Härters besonders bewährt hat;
Und gegebenenfalls mindestens ein organisches Lösemittel auf Basis eines Esters und/oder Ethers, mit einem Gesamtgehalt von 0 Gew.-% oder im Bereich von 0,1 bis 15 Gew.-% oder von 2 bis 10 Gew.-%.

Eine homogene Mischung des Härters kann beispielsweise durch Verwendung eines Vakuum-Dissolvers erzielt werden.

Vorzugsweise enthält die erfindungsgemäße Zusammensetzung der Dichtmasse:
Mindestens ein Basispolymer mit einem Gehalt im Bereich von 20 bis 97 Gew.-% vor der Vernetzungsreaktion mit der Epoxidverbindung-basierten Härter, bevorzugt im Bereich von 40 bis 95 Gew.-%, von 45 bis 90 Gew.-%, von 50 bis 85 Gew.-%, von 55 bis 80 Gew.-% oder im Bereich von 60 bis 75 Gew.-% mindestens eines mercaptoterminierten Polymers;
Mindestens ein Basispolymer mit einem Gehalt im Bereich von 20 bis 97 Gew.-% nach der Vernetzungsreaktion mit dem Epoxidverbindung-basierten Härter, bevorzugt im Bereich von 40 bis 95 Gew.-%, von 45 bis 90 Gew.-%, von 50 bis 85 Gew.-%, von 55 bis 80 Gew.-% oder im Bereich von 60 bis 75 Gew.-%, das nach der Vernetzungsreaktion mit Epoxid ein Polymer/Copolymer auf Basis von Hydroxythioether, Hydroxysulfid und/oder Hydroxythioethersulfid ist;
Mindestens einen Photoinitiator, der ein Radikal auf Basis von tertiärem Amin und / oder Amidin und/oder Guanidin freisetzen kann, im Bereich von 0,05 bis 5 Gew.-%, von 0,1 bis 4 Gew.-%, von 0,3 bis 3 Gew.-% oder von 0,6 bis 2 Gew.-% und/oder die Radikale und/oder die kurze Zeit danach hieraus entstehenden Verbindungen mit einem Gesamtgehalt von 0 Gew.-% oder im Bereich von 0,05 bis 5 Gew.-%, von 0,1 bis 4 Gew.-%, von 0,3 bis 3 Gew.-% oder von 0,6 bis 2 Gew.-%;
Gegebenenfalls mindestens einen Photosensibilisator mit einem Gesamtgehalt von 0 Gew.-% oder im Bereich von 0,05 bis 5 Gew.-%, von 0,1 bis 4 Gew.-%, von 0,3 bis 3 Gew.-% oder von 0,6 bis 2 Gew.-%;
Mindestens eine Epoxidverbindung mit einem Gesamtgehalt im Bereich von 1 bis 40, von 3 bis 30, von 5 bis 25, von 7 bis 20 Gew.-%, von 8 bis 18 oder von 9 bis 16 Gew.-%;
Gegebenenfalls mindestens einen Füllstoff mit einem Gesamtgehalt von 0 Gew.-% oder im Bereich von 0,1 bis 50 Gew.-%, von 2 bis 40 Gew.-%, von 5 bis 30 Gew.-%, von 10 bis 20 Gew.-% oder von 6 bis 15 Gew.-%;
Gegebenenfalls mindestens einen Leichtfüllstoff mit einem Gesamtgehalt von 0 Gew.-% oder im Bereich von 0,1 bis 30 Gew.-%, von 3 bis 25 Gew.-%, von 5 bis 20 Gew.-% oder von 8 bis 15 Gew.-%;
Gegebenenfalls mindestens ein Thixotropiermittel mit einem Gesamtgehalt von 0 Gew.-% oder im Bereich von 0,01 bis 30 Gew.-%, von 0,01 bis 10 Gew.-%, von 0,2 bis 25 Gew.-%, von 0,5 bis 20 Gew.-%, von 1 bis 15 Gew.-%, von 0,5 bis 8 Gew.-% oder von 1,5 bis 5 Gew.-%, wobei grundsätzlich auch größere Mengen als 10 Gew.-% möglich sind, insbesondere wenn das Thixotropiermittel gleichzeitig als Füllstoff dient und für die energiereiche aktinische Strahlung ausreichend durchlässig ist, wobei es in diesem Fall bezüglich seines Gehalts nur als Thixotropiermittel gezählt wird;
Gegebenenfalls mindestens einen Weichmacher mit einem Gesamtgehalt von 0 Gew.-% oder im Bereich von 0,1 bis 30 Gew.-%, von 2 bis 20 Gew.-%, von 5 bis 15 Gew.-% oder von 6 bis 10 Gew.-%;
Gegebenenfalls mindestens einen Haftvermittler mit einem Gesamtgehalt von 0 Gew.-% oder im Bereich von 0,1 bis 10 Gew.-%, von 0,3 bis 8 Gew.-%, von 0,6 bis 6 Gew.-%, von 1 bis 5 Gew.-%, von 2 bis 4 Gew.-% oder von 1,5 bis 3 Gew.-%;
Gegebenenfalls mindestens ein Alterungsschutzmittel mit einem Gesamtgehalt von 0 Gew.-% oder im Bereich von 0,5 bis 2,5 Gew. % oder von 0,5 bis 1,5 Gew.-%;
Und gegebenenfalls mindestens ein organisches Lösemittel auf Basis eines Esters und/oder Ethers, mit einem Gesamtgehalt von 0 Gew.-% oder im Bereich von 0,1 bis 15 Gew.-% oder von 2 bis 10 Gew.-%.

Eine homogene Mischung der Dichtmasse kann beispielsweise durch Verwendung eines Techkit-Kartuschenmischers oder eines Statikmischers ("Side by Side" oder als "bulk mixer") erzielt werden.

Das Gewichtsverhältnis von mercaptoterminiertem Basispolymer zu Epoxid-basierten Verbindungen im Härter liegt ohne Berücksichtigung der Gehalte an weiteren Verbindungen der jeweiligen Zusammensetzungen vorzugsweise im Bereich von 100 : 3 bis 100 : 50, besonders bevorzugt im Bereich von 100 : 4 bis 100 : 25, von 100 : 5 bis 100 : 15 oder von 100 : 6 bis 100 : 12.

Zur Härtung werden Grundmasse und Härter bei dem erfindungsgemäßen Dichtmassensystem so gemischt, dass die Epoxidgruppen des Härters überstöchiometrisch zu den Mercaptogruppen der Grundmasse (des Basispolymers) vorliegen. Der Überschuss der Epoxidgruppen beträgt hierbei bevorzugt 1 bis 80 mol-%, besonders bevorzugt 5 bis 50 mol-% und ganz besonders bevorzugt 10 bis 30 mol-%.

Das Gewichtsverhältnis der Grundmasse zu dem Epoxid-basiertem Härter liegt bei Berücksichtigung der Gehalte an weiteren Verbindungen der jeweiligen Zusammensetzungen vorzugsweise im Bereich von 100 : 3 bis 100 : 30, besonders bevorzugt im Bereich von 100 : 4 bis 100 : 25, von 100 : 5 bis 100 : 15 oder von 100 : 6 bis 100 : 12.

Das Molgewichtsverhältnis der Grundmasse zu dem Epoxid-basiertem Härter liegt bei Berücksichtigung der weiteren Gehalte der jeweiligen Zusammensetzungen vorzugsweise im Bereich von 0,6 : 1 bis 5 : 1, besonders bevorzugt im Bereich von 0,8 : 1 bis 4 : 1, von 0,9 : 1 bis 3 : 1 oder von 1 : 1 bis 2 : 1.

Das Gewichtsverhältnis von mercaptoterminiertem Basispolymer zu Photoinitiator liegt ohne Berücksichtigung weiterer Gehalte der jeweiligen Zusammensetzungen vorzugsweise im Bereich von 100 : 0,1 bis 100 : 5, besonders bevorzugt im Bereich von 100 : 0,5 bis 100 : 4, von 100 : 0,8 bis 100 : 3 oder von 100 : 1 bis 100 : 2.

Das Molgewichtsverhältnis von Mercapto-Gruppen zu Epoxid-Gruppen liegt ohne Berücksichtigung weitere Gehalte und Gruppen der jeweiligen Zusammensetzungen vorzugsweise im Bereich von 1 : 0,8 bis 1 : 2, besonders bevorzugt im Bereich von 1 : 0,9 bis 1 : 1,5, von 1 : 0,95 bis 1 : 1,3 oder von 1 : 0,98 bis 1 : 1,2.

Vorzugsweise weisen die erfindungsgemäße Dichtmasse und das erfindungsgemäße Dichtmassen-System ein mercaptoterminiertes Basispolymer auf Basis von Polyether, Polythioether, Polythioethersulfid, Polysulfid, deren Copolymeren und/oder deren Mischungen, mindestens einen Photoinitiator auf Basis von sterisch gehindertem tertiären Amin und/oder sterisch gehindertem Amidin und/oder sterisch gehindertem Guanidin und mindestens eine Epoxidverbindung sowie gegebenenfalls mindestens ein Additiv auf. Das mindestens eine Additiv kann vorzugsweise jeweils mindestens eines sein, das ausgewählt wird aus der Gruppe bestehend aus Photosensibilisatoren, Füllstoffen, Leichtfüllstoffen, Thixotropiermitteln, Weichmachern, Haftvermittlern, Alterungsschutzmitteln, Flammschutzmitteln, Vernetzungsmitteln, Harzen und organischen Lösemitteln. Vorzugsweise ist als Füllstoff Magnesiumsilicathydrat, Aluminiumsilicat, Aluminiumhydroxid wie z.B. Aluminiumtrihydrat und/oder Calciumsilicat enthalten. Ein Teil dieser Hauptkomponenten und gegebenenfalls auch ein Teil dieser Additive können auch in der Grundmasse und/oder im Härter enthalten sein.

Die erfindungsgemäßen Massen weisen vorzugsweise folgende Eigenschaften auf:
Die erfindungsgemäßen Grundmassen und Dichtmassen weisen üblicherweise die meisten, wenn nicht alle der im Folgenden genannten Eigenschaften auf:
Die dynamische Viskosität der erfindungsgemäßen Grundmassen und Dichtmassenliegt vorzugsweise zwischen 1 und 2500 Pa·s oder zwischen 10 bis 1800 Pa·s bestimmt nach DIN 65262-1, gemessen mit Brookfield-Viskosimeter bei 23 °C, mit Spindel 7 bei 2 bis 10 U/min.
Die UV-Bestrahlung erfolgt vorzugsweise je nach Schichtdicke und/oder UV-Quelle über einen Zeitraum von 1 s bis 5 min, vorzugsweise von 5 s bis 3 min oder von 10 s bis 1 min. Die klebfreie Zeit der Dichtmasse bestimmt nach DIN 65262-1 liegt vorzugsweise im Bereich von 1 s bis 10 min insbesondere je nach Schichtdicke und liegt oft im Bereich von 0,3 bis 5 min oder von 1 bis 3 min, nach der UV-Bestrahlung.

Eine Verarbeitungszeit der ungehärteten Dichtmassen bestimmt nach DIN 65262-1 liegt vorzugsweise im Bereich von 0,5 bis 24 Stunden - unter anderem je nach Photoinitiator-Menge der zu bestrahlenden Grundmasse, besonders bevorzugt im Bereich von 0,5 bis 6 oder 0,5 bis 2 Stunden.

Eine Dichtmasse, die nach dem erfindungsgemäßen Verfahren hergestellt ist, weist/wies vorzugsweise eine klebfreie Zeit - insbesondere auch je nach Photoinitiator-Konzentration - entsprechend DIN 65262-1 auf im Bereich von 0,05 bis 10 Minuten nach der energiereichen aktinischen Bestrahlung.

Die Durchhärtezeit oder die Zeit zum Erreichen der Shore A-Härte von 30 bestimmt nach ISO 7619-1 liegt bei den erfindungsgemäßen Dichtmassen vorzugsweise - unter anderem je nach Photoinitiator-Menge und/oder Schichtdicke - im Bereich von 1 bis 960 min, bevorzugt im Bereich von 5 bis 300 min, besonders bevorzugt im Bereich von 10 bis 90 min.

Die Dichte der erfindungsgemäßen Grundmassen und Dichtmassen bestimmt nach ISO 2781 liegt vorzugsweise im Bereich von 0,9 bis 1,6 g/cm³ und oft im Bereich von 1,0 bis 1,5 g/cm³.

Die erfindungsgemäßen Dichtmassen zeigen vorzugsweise eine Shore A-Härte bestimmt nach ISO 7619-1 und gemessen 2 Wochen nach UV-Bestrahlung bei Lagerung an Luft bei 23 ± 2 °C und 50 ± 5 % relative Luftfeuchtigkeit im Bereich von 20 bis 80, besonders bevorzugt im Bereich von 30 bis 60, besonders bevorzugt im Bereich von 40 bis 55.

Die Bruchdehnung der erfindungsgemäßen Dichtmassen bestimmt nach ISO 37 und gemessen 2 Wochen nach UV-Bestrahlung bei Lagerung an Luft bei 23 ± 2 °C und 50 ± 5 % relative Luftfeuchtigkeit liegt vorzugsweise im Bereich von 100 bis 1000 %, besonders bevorzugt im Bereich von 200 bis 800 % oder von 300 bis 600 %.

Die Bruchdehnung der erfindungsgemäßen Dichtmassen bestimmt nach ISO 37 und gemessen nach 168 Stunden 60 °C Treibstofflagerung mit dem Treibstofftyp Jet A1 liegt vorzugsweise im Bereich von 100 bis 800 %, besonders bevorzugt im Bereich von 200 bis 600 % oder von 300 bis 500 %.

Die Bruchdehnung der erfindungsgemäßen Dichtmassen bestimmt nach ISO 37 und gemessen nach 300 Stunden 100 °C Treibstofflagerung mit dem Treibstofftyp Jet A1 liegt vorzugsweise im Bereich von 100 bis 700 %, besonders bevorzugt im Bereich von 200 bis 600 % oder von 300 bis 500 %.

Die Bruchdehnung der erfindungsgemäßen Dichtmassen bestimmt nach ISO 37 und gemessen nach 1000 Stunden 35 °C Wasserlagerung liegt vorzugsweise im Bereich von 100 bis 700 %, besonders bevorzugt im Bereich von 200 bis 500 % oder von 250 bis 350 %.

Der Schälwiderstand der erfindungsgemäßen Dichtmassen auf Aluminiumlegierung 2024 T3 bestimmt nach DIN 65262-1 liegt vorzugsweise im Bereich von 60 bis 350 N/25mm, besonders bevorzugt im Bereich von 100 bis 250 N/25mm oder von 150 bis 200 N/25mm.

Der Schälwiderstand der erfindungsgemäßen Dichtmassen auf Lacken wie z.B. auf lösungsmittelhaltigen Grundlacken wie z.B. Epoxy-Grundlack 37035 A (Fa. Akzo Nobel Aerospace Coatings), auf wässerigen Grundlacken wie z.B. solchen auf Epoxid-basis wie Seevenax^{®} 313-01 und Seevenax^{®} 313-02 (Fa. Mankiewicz), auf Decklacken wie z.B. auf wässerigen Decklacken auf Epoxidbasis wie Seevenax^{®} 311-03 (Fa. Mankiewicz), auf Finish F 70-A (Fa. Mapaero) und/oder auf lösungsmittelhaltigen Decklacken auf Polyurethanbasis wie Aerodur^{®} C21-100 (Fa. Akzo Nobel) und Alexit^{®} 406-22 (Fa. Mankiewicz) bestimmt nach DIN 65262-1 liegt vorzugsweise im Bereich von 50 bis 350 N/25mm, besonders bevorzugt im Bereich von 100 bis 300 N/25mm oder von 150 bis 200 N/25mm.

Die Zugfestigkeit der erfindungsgemäßen Dichtmassen bestimmt nach ISO 37 und gemessen 2 Wochen nach UV-Bestrahlung bei Lagerung an Luft bei 23 ± 2 °C und 50 ± 5 % relative Luftfeuchtigkeit liegt vorzugsweise im Bereich von 0,5 bis 3,8 MPa, besonders bevorzugt im Bereich von 1 bis 3,5 MPa oder von 1,8 bis 3,0 MPa.

Die Zugfestigkeit der erfindungsgemäßen Dichtmassen bestimmt nach ISO 37 und gemessen nach 168 Stunden 60 °C Treibstofflagerung Typ Jet A1 im Bereich von 0,5 bis 3,5 MPa, besonders bevorzugt im Bereich von 1 bis 3,0 oder von 1,5 bis 2,8 MPa.

Die Zugfestigkeit der erfindungsgemäßen Dichtmassen bestimmt nach ISO 37 und gemessen nach 300 Stunden 100 °C Treibstofflagerung Typ Jet A1 liegt vorzugsweise im Bereich von 0,5 bis 3,5 MPa, besonders bevorzugt im Bereich von 1 bis 3,0 MPa oder von 1,2 bis 2,8 MPa.

Die Zugfestigkeit der erfindungsgemäßen Dichtmassen bestimmt nach ISO 37 und gemessen nach 1000 Stunden 35 °C Wasserlagerung liegt vorzugsweise im Bereich von 0,5 bis 3,5 MPa, besonders bevorzugt im Bereich von 1 bis 3,0 MPa oder von 1,5 bis 2,7 MPa.

Das erfindungsgemäße Dichtmassen-System und/oder die erfindungsgemäße Dichtmasse weisen vorzugsweise eine Shore A-Härte von mindestens 10, gemessen 5 bis 600 Minuten nach energiereicher aktinischer Bestrahlung, und eine Shore A-Härte im Bereich von 30 bis 60, gemessen 2 Wochen nach energiereicher aktinischer Bestrahlung, auf.

Und/oder die Kälteflexibilität der erfindungsgemäßen Dichtmassen, für deren Bestimmung die Dichtmasse insbesondere in Form einer Folie nach der energiereichen aktinischen Bestrahlung 2 Wochen lang bei einer Umgebungstemperatur von 23 ± 2 °C und 50 ± 5 % relative Luftfeuchtigkeit gelagert wird, anschließend kurzzeitig auf eine Temperatur von -55 ± 2 °C abgekühlt wird, bei dieser tiefen Temperatur in einem Winkel von 30° gebogen wird und danach bei Raumtemperatur auf das Auftreten von Fehlstellen nach hausinterner Prüfvorschrift visuell untersucht wird. Hiernach zeigen die erfindungsgemäßen Dichtmassen vorzugsweise keine Risse und auch keine anderen Fehlstellen, die durch die Biegung bei tiefer Temperatur entstanden sind.

Das erfindungsgemäße Dichtmassen-System und/oder die erfindungsgemäße Dichtmasse weisen vorzugsweise nach vollständiger Aushärtung folgende Eigenschaften auf:
Keine Risse oder andere Fehlstellen in der Dichtmasse, die bei der Bestimmung der Tieftemperaturflexibilität durch ein Biegen in einem Winkel von 30° bei einer Temperatur von -55 ± 2 °C entstanden sind,
eine Zugfestigkeit im Bereich von 0,5 bis 3,8 MPa nach 168 Stunden Treibstofflagerung bei einer Temperatur von 60 °C, nach 300 Stunden Treibstofflagerung bei einer Temperatur von 100 °C und nach 1000 Stunden Wasserlagerung bei einer Temperatur von 35 °C,
eine Bruchdehnung im Bereich von 100 bis 800 % nach 168 Stunden Treibstofflagerung bei einer Temperatur von 60 °C, nach 300 Stunden Treibstofflagerung bei einer Temperatur von 100 °C und nach 1000 Stunden Wasserlagerung bei einer Temperatur von 35 °C und/oder
eine Dichte im Bereich von 1,00 bis 1,50 g/cm³.

Das erfindungsgemäße Dichtmassen-System und/oder die erfindungsgemäße Dichtmasse weisen vorzugsweise nach vollständiger Aushärtung folgende Eigenschaften auf:
Eine Zugfestigkeit im Bereich von 0,5 bis 3,5 MPa,
eine Bruchdehnung im Bereich von 100 bis 900 % und/oder
einen Schälwiderstand im Bereich von 50 bis 300 N/25mm.

Der Schälwiderstand wird hierbei insbesondere an Substraten von Aluminium oder Aluminiumlegierungen, von Titan oder Titanlegierungen, von Edelstählen, von Kompositwerkstoffen wie z.B. Carbon-faserverstärkter Kunststoff CFK und/oder an lackierten Substraten, die z.B. mit mindestens einem lösungsmittelhaltigen oder wässerigen Grundlack und/oder Decklack insbesondere auf Basis von Epoxy-, Polyester- oder Polyurethan-Lack lackiert sind, bestimmt.

### Weitere überraschende Vorteile werden im Folgenden aufgeführt:

Die Photoinitiatoren, die tertiäres Amin und/oder Amidin und/oder Guanidin freisetzen, lösen bei energiereicher aktinischer Bestrahlung überraschenderweise auch die chemische Reaktion von Epoxidverbindungen mit Mercaptanen aus und/oder beschleunigen sie, z.B. wenn die erfindungsgemäße Mischung der Dichtmasse UV-Licht ausgesetzt wird.

Es war überraschend, dass ein Photoinitiator, der nur geringe Mengen an tertiärem Amin-Radikal, Amidin-Radikal und/oder Guanidin-Radikal freisetzt, ausreichende Mengen katalytischer Aktivität für die Aushärtung von Grundmassen bereitstellt.

Es war überraschend, dass vielfach bereits eine so geringe Menge wie z.B. 0,1 Gew.-% an Photoinitiator in der Dichtmasse auch für verdeckte Stellen, hintergriffige Stellen und Bohrungen für eine katalytische Aktivierung ausreichen.

Es war überraschend, dass mit dem gefundenen Dichtmassen-System sowohl die Aushärtung größerer Schichtdicken von z.B. etwa 7 mm Schichtdicke möglich ist, als auch die beschleunigte Aushärtung bei diesen Schichtdicken.

Offenbar erstmalig werden solche besonders schnell oberflächenhärtenden und lange verarbeitbaren Dichtmassen beschrieben.

Offenbar erstmalig werden solche besonders schnell oberflächenhärtenden und sogar auf Befehl ("on demand") arbeitenden Dichtmassen beschrieben.

Überraschenderweise werden bei vorgegebenen Verarbeitungszeiten äußerst kurze klebfreie Zeiten und im Vergleich zum Stand der Technik auch äußerst kurze Durchhärtezeiten erzielt.

Überraschenderweise wurde festgestellt, dass die erfindungsgemäßen Dichtmassen für den Start der Härtung vielfach mit sehr geringen UV-Dosen auskommen, das heißt mit einer UV-Dosis ab etwa 1 J/cm².

Bei dem erfindungsgemäßen Verfahren können sowohl besonders dünne Schichten von Dichtmassen z.B. von 0,1 bis 0,5 µm und auch besonders dicke Schichten z.B. von 3 bis 7 mm mit UV-Licht ausgehärtet werden, so dass z.B. ein Bereich etwa von 0,1 bis 7 mm ausgehärtet werden kann. Dabei können die Dichtmassen sowohl flächig, als auch raupenartig aufgetragen werden bzw. aufgetragen sein.

Das erfindungsgemäße Beschichtungsverfahren eignet sich insbesondere für die Luftfahrtindustrie, kann aber auch überall dort eingesetzt werden, wo eine schnelle Durchhärtung und vor allem eine sehr schnelle Oberflächenhärtung bei einer relativ langen Verarbeitungszeit der Dichtmasse erforderlich und/oder vorteilhaft sind.

Das erfindungsgemäße Beschichtungsverfahren eignet sich insbesondere zum Abdichten von Konstruktionselementen wie z.B. von Tanks und von abzudichtenden Bereichen wie z.B. Pflasterungen wie bei Tankstellen und Chemieanlagen, zum Verbinden von aufeinanderliegenden Konstruktionselementen wie z.B. Blechen, Folien und anderen Substraten, zum Verfüllen von Hohlräumen und Zwischenräumen, zum Beschichten insbesondere von metallischen Materialien und von Kompositen wie z.B. kohlenstofffaserverstärkten oder glasfaserverstärkten Kunststoffen, zum aerodynamischen Glätten und Verdichten sowie als Korrosionsschutz an Stellen, wo z.B. im Bereich von Bohrungen die Korrosionsschutzschichten der metallischen Elemente verletzt oder entfernt werden. Es kann auch eine tragende Funktion z.B. während des Transports erfüllen.

Die erfindungsgemäßen Verfahren eignen sich insbesondere zur Verwendung in der Transportindustrie wie z.B. im Automobilbau, im Schienenfahrzeugbau, im Schiffsbau, im Luftfahrzeugbau oder im Raumfahrzeugbau, im Apparate- und Maschinenbau, im Bauwesen oder für die Herstellung von Möbeln.

Das erfindungsgemäße Dichtmassen-System, die erfindungsgemäße Grundmasse, der erfindungsgemäße Härter und/oder die erfindungsgemäße Dichtmasse eignen sich insbesondere zur Verwendung für den Bau und für die Instandhaltung von Luft- und Raumfahrzeugen, von Automobilen und Schienenfahrzeugen, im Schiffsbau, im Apparate- und Maschinenbau, im Bauwesen z.B. für die Abdichtung von Bodenplatten z.B. bei Tankstellen und chemischen Anlagen sowie als Gießharz oder für die Herstellung von Gießharzen für die Elektrotechnik und Elektronik.

### Beispiele und Vergleichsbeispiele

Der Gegenstand der Erfindung wird im Folgenden anhand von Ausführungsbeispielen näher erläutert.

### Allgemeine Herstell- und Prüfvorschrift der erfindungsgemäßen Dichtmassen:

Die erfindungsgemäße Grundmasse wurde hergestellt, indem zuerst PolysulfidPolymere, wie z.B. Thiokol^{®} LP 12, Thioplast^{®} G 10 und/oder Thioplast^{®} G131, und/oder Polythioetherpolymere und/oder Polythioethersulfidpolymere und/oder Polyetherpolymere, mindestens ein Photoinitiator auf Basis von sterisch gehindertem tertiärem Amin und/oder Amidin und/oder Guanidin, mindestens ein Photosensibilisator, auf Basis von Benzophenon und/oder Isopropylthioxanthon, ein Thixotropiermittel, wie z.B. auf Basis von Sepiolith, und ein Haftvermittler, wie z.B. auf Basis von einem Phenolharz oder auf Basis von organofunktionellem Alkoxysilan, für 10 Minuten unter Vakuum von < 50 mbar und unter Kühlung eines Planetendissolvers mit Kühlwasser bei einer Drehzahl von ca. 2000 U/min vermischt wurden. Anschließend wurden die restlichen Füllstoffe, wie z.B. auf Basis von Magnesiumsilicathydraten, Aluminiumsilicaten, Calciumsilicaten, Polyamiden und/oder Polyethylenwachsen, und ein Alterungsschutzmittel, wie z.B. auf Basis von Phosphorigsäureester, hinzugegeben und für weitere 10 bis 20 Minuten unter Vakuum von < 50 mbar mittels Planetendissolver mit einer Drehzahl von ca. 2000 U/min dispergiert. Die verwendeten Polysulfide, Polythioether, Polythioethersulfide, Polyether und ihre Copolymere waren immer mercaptoterminiert.

Für eine gute Dispergierung der Grundmasse sind insbesondere die Drehzahlbereiche von 1800 bis 2200 U/min und Zeiten von 30 bis 40 Minuten je nach Zusammensetzung, rheologischen Eigenschaften und apparativer Ausstattung geeignet.

Der erfindungsgemäße Härter wurde hergestellt, indem die Epoxidverbindungen mit dem Thixotropiermittel auf Basis von pyrogener Kieselsäure Aerosil^{®} R202 unter Vakuum von < 50 mbar mittels Planetendissolver mit einer Drehzahl von ca. 2000 U/min vermischt wurden.

Zum Verdichten, Verfüllen und/oder Beschichten von Konstruktionsteilen und zum Herstellen von Prüfkörpern wurden die Grundmasse und der Härter in einem Mischungsverhältnis von 100 : 5 bis 100:7 vermischt und anschließend mit energiereicher aktinischer Strahlung aktiviert. Die erfindungsgemäßen Dichtmassen härteten auch ohne energiereiche aktinische Bestrahlung aus, wobei je nach Schichtdicke dann jedoch eine Zeit im Bereich von 24 bis 168 Stunden bei Schichtdicken im Bereich von 0,2 bis 6 mm für die Durchhärtung erforderlich war.

Die mechanischen Eigenschaften der Dichtmassen wie z.B. Shore A-Härte bestimmt nach ISO 7619-1, Zugfestigkeit und Bruchdehnung bestimmt nach ISO 37 wurden ermittelt, nachdem die Dichtmasse 7 Tage an Luft bei einer Umgebungslufttemperatur von 23 °C und 50 % relativer Luftfeuchtigkeit gelagert wurde. Hierbei wurde nach dem Anmischen der Grundmasse mit dem Härter an Luft die Dichtmasse sofort auf einem Substrat aufgetragen und unmittelbar danach mit energiereicher aktinischer Strahlung bestrahlt. Von da an wurde an Luft gelagert.

Zur Aktivierung der Dichtmasse wurde im Regelfall ein UV-Flächenstrahler mit einer Fe-dotierten Hg-Lampe bei einer Leistung von 400 W verwendet. Hierbei sind alle kommerziell erhältlichen UV-Lichtquellen einschließlich UV-Licht-emittierenden Dioden und Fluoreszenzlampen oder Elektronenstrahlquellen zur Härtung der aktinisch aktivierbaren Beschichtungen geeignet. Die Dichtmassen lassen sich bei einer Wellenlänge im Bereich von 315 bis 600 nm wie UVA und/oder UV/VIS aushärten.

Die in Tabelle 4 aufgeführten Rezepturen der erfindungsgemäßen Beispiele wurden hergestellt, um den Einfluss von drei verschiedenen Photoinitiatoren auf die Verarbeitungseigenschaften der ungehärteten Grundmasse und der härtenden Dichtmasse, sowie auf die mechanischen Eigenschaften der Dichtmasse zu ermitteln. Die erfindungsgemäßen Grundmassen und die Härter-Zusammensetzungen wurden wie auch in allen anderen Beispielen entsprechend der oben genannten Vorschrift hergestellt. Die beiden Teilmischungen wurden in einem Massenverhältnis von 100 : 5 homogen vermischt, in einer Schichtdicke von 2 mm auf Blechen einer Aluminiumlegierung durch Extrudieren aus einer Mischerkartusche bei ca. 23 °C appliziert und anschließend mit einem Fe-dotierten UV-Flächenstrahler bei Wellenlängen im Bereich von 300 bis 600 nm, bei einer UV-Dosis von ca. 10 J/cm² und bei einer UV-Intensität von 0,3 W/cm² im Abstand von 10 cm über 40 s bestrahlt. Hierbei erwärmte sich die aushärtende Beschichtung geringfügig, wobei keine 60 °C erreicht wurden.

Anschließend wurden die ausgehärteten Dichtmassen von der Prüfform entfernt und über 7 Tage bei 23 ± 2 °C bei 50 ± 5 % relative Luftfeuchtigkeit an Luft gelagert, bevor die mechanischen Eigenschaften wie z.B. Härte, Dehnung und Zugfestigkeit bestimmt wurden. Nach der Lagerung an Luft erfolgte hieran anschließend eine Lagerung in verschiedenen anderen Medien, siehe Tabelle 7.

Als Photoinitiator 1 wurde 2-Dimethylamino-2-(4-methyl-benzyl)-1-(4-morpholin-4-yl-phenyl)-butan-1-one eingesetzt. Als Photoinitiator 2 wurde 2-Benzyl-2-dimethyl-amino-1-(4-morpholinophenyl)-butanone-1 verwendet. Als Photoinitiator 3 wurde ein sterisch gehindertes DBN eingesetzt. Als zusätzlicher Katalysator wurde Triethylendiamin eingesetzt. Als Härter wurde eine Mischung aus einem Bisphenol A-Epoxidharz mit einem Epoxid-Äquivalentgewicht von 180-195 g/eq und einer Viskosität von 10-15 Pa · s (erhältlich als Epikote 828 oder DER 331) und dem Reaktivverdünner basierend auf 1,4-Butandioldiglycidylether verwendet. Die Mischung Bisphenol A-Epoxidharz/Reaktivverdünner betrug 4:1. Die gemessenen Eigenschaften der Beispiele sind in Tabelle 5 aufgeführt.

Vergleichsbeispiel 1 (VB1) enthält keinen Photoinitiator und wurde hergestellt, um die Wirkung der einzelnen Photoinitiatoren besser vergleichen zu können. Die Vergleichsbeispiele 2 und 3 (VB2 und VB3) enthalten als Photoinitiatoren sterisch gehinderte tertiäre Amine, welche allerdings nach der Aktivierung mit UV-Licht eine zu niedrige Basizität besitzen, um die Härtungsreaktion in Gang zu setzen und/oder zu beschleunigen. Daher ist hier kein Vorteil im Vergleich zu VB1 erkennbar. Überraschenderweise zeigt Beispiel 1 (B1) eine deutlich beschleunigte Reaktion durch den Einsatz des sterisch gehinderten DBN. Demnach scheint das sterisch gehinderte DBN eine ausreichend hohe Basizität zu besitzen, um die Reakion zwischen den SH-Gruppen und den Epoxygruppen zu katalysieren.

**Tabelle 4: Zusammensetzung von VB1 bis VB3 sowie B1**

| **Gehalt in Gew.-% / Beispiel** | **VB1** | **VB2** | **VB3** | **B1** |
|---|---|---|---|---|
| **Grundmasse** | | | | |
| Polythioethersulfid 1 (3500-4400 g/mol) | 71,6 | 69,7 | 69,7 | 69,7 |
| Photoinitiator 1 | | 1 | | |
| Photoinitiator 2 | | | 1 | |
| Photoinitiator 3 | | | | 1 |
| 1,4-Dimethylpiperazin | 0,4 | 0,4 | 0,4 | 0,4 |
| Photosensibilisator: Benzophenon | | 0,9 | 0,9 | 0,9 |
| Füllstoff Aluminiumsilicat | 22,0 | 22,0 | 22,0 | 20,2 |
| Haftvermittler Mercaptopropyltrimethoxysilan | 1,0 | 1,0 | 1,0 | 1,0 |
| Thixotropiermittel Sepiolith | 3,0 | 3,0 | 3,0 | 3,0 |
| Alterungsschutzmittel Phosphorigsäureester | 2,0 | 2,0 | 2,0 | 2,0 |
| Summe | 100 | 100 | 100 | 100 |

| **Härter** | | | | |
|---|---|---|---|---|
| Bisphenol A-Epoxidharz | 78,4 | 78,4 | 78,4 | 78,4 |
| 1,4-Butandioldiglycidylether | 19,6 | 19,6 | 19,6 | 19,6 |
| Pyrogene Kieselsäure | 2 | 2 | 2 | 2 |
| Summe | 100 | 100 | 100 | 100 |
| Mischungsverhältnis Grundmasse : Härter | 100:5 | 100:5 | 100:5 | 100:5 |

**Tabelle 5: Eigenschaften von VB1 bis VB3 sowie B1**

| **Eigenschaften / Beispiel** | **VB1** | **VB2** | **VB3** | **B1** |
|---|---|---|---|---|
| Verarbeitungszeit [min] | 120 | 120 | 120 | 60 |
| Klebfreie Zeit [min] | 405 | 415 | 410 | 5 |
| Durchhärtezeit f. Anfangshärte Shore A 30 [min] | 535 | 540 | 535 | 90 |
| Shore A-Härte nach 7 Tagen RT | 48 | 49 | 48 | 47 |
| Zugfestigkeit [MPa] nach 7 Tagen RT | 1,85 | 1,89 | 1,83 | 1,92 |
| Dehnung [%] nach 7 Tagen RT | 398 | 391 | 401 | 397 |

Im folgenden Beispiel 2 (B2) und im Vergleichsbeispiel 4 (VB4) wird eine erfindungsgemäße Formulierung mit der konventionellen mangandioxidhärtenden Dichtmasse MC-780 B-1/2, welche kommerziell verfügbar ist, verglichen. B2 wird einmal mit UV-Licht aktiviert und ein anderes Mal nicht mit UV-Licht aktiviert. Tabelle 6 zeigt die Zusammensetzung dieser Formulierungen. In Tabelle 7 sind die Eigenschaften dieser Dichtmassen zusammengefasst. Hierbei ist deutlich zu erkennen, dass beide Dichtmassen die gleiche Verarbeitungszeit besitzen. Überraschenderweise wird die erfindungsgemäße Dichtmasse deutlich schneller klebfrei und erreicht deutlich schneller die Anfangshärte von 30 Shore A, im Vergleich zur MC-780 B-1/2, wenn sie zuvor mit UV-Licht aktiviert wurde. Wenn sie zuvor nicht mit UV-Licht aktiviert wurde, erreicht die Dichtmasse trotzdem ihre Endeigenschaften, allerdings nach deutlich längerer Zeit. Die erfindungsgemäße Dichtmasse zeigt überraschenderweise gute mechanische Eigenschaften auch nach Lagerung in verschiedenen Medien und bei erhöhter Temperatur wie z.B. Lagerung in Wasser bei 35 °C oder Lagerung in Treibstoff bei 60 °C oder 100 °C.

**Tabelle 6: Zusammensetzung von B2 und VB4**

| **Gehalt in Gew.-% / (Vergleichs-)Beispiel** | **B2** | **VB4** |
|---|---|---|
| **Grundmasse** | | |
| Grundmasse MC-780 B-1/2 | | 100 |
| Polythioethersulfid 1 (3500 - 4400 g/mol) | 47,3 | |
| Polythioethersulfid 2 (1500 - 2400 g/mol) | 20,5 | |
| Photoinitiator 3 | 1,5 | |
| 1,4-Dimethylpiperazin | 0,6 | |
| Photosensibilisator: Isopropylthioxanthon | 1,3 | |
| Füllstoff Feldspat | 22,0 | |
| Haftvermittler Phenolharz | 1,5 | |
| Thixotropiermittel Sepiolith | 3,2 | |
| Alterungsschutzmittel Phosphorigsäureester | 2,1 | |
| Summe | 100 | 100 |

| **Härter** | | |
|---|---|---|
| Härter MC-780 B-1/2 | | 100 |
| Bisphenol A-Epoxidharz | 78,4 | |
| 1,4-Butandioldiglycidylether | 19,6 | |
| Pyrogene Kieselsäure | 2 | |
| Summe | 100 | 100 |
| Mischungsverhältnis Grundmasse : Härter | 100:7 | 100:10 |

**Tabelle 7: Vergleich der Eigenschaften von B2 und VB4**

| **Eigenschaften / (Vergleichs-)Beispiel** | **B2 mit UV-Licht aktiviert** | **B2 nicht mit UV-Licht aktiviert** | **VB4** |
|---|---|---|---|
| Verarbeitungszeit [min] | 30 | 30 | 30 |
| Klebfreie Zeit [min] | 5 | 510 | 240 |
| Durchhärtezeit f. Anfangshärte Shore A 30 [min] | 40 | 970 | 480 |
| Shore A-Härte nach 7 Tagen RT | 53 | 53 | 50 |
| Zugfestigkeit [MPa] nach 7 Tagen RT | 2,20 | 2,18 | 1,5 - 2,2 |
| Dehnung [%] nach 7 Tagen RT | 318 | 323 | 300 - 400 |
| Zugfestigkeit [MPa] nach 168 h 60 °C Treibstofflagerung | 2,12 | 2,09 | 1,5 - 2,0 |
| Dehnung [%] nach 168 h 60 °C Treibstofflagerung | 309 | 312 | 300 - 400 |
| Zugfestigkeit [MPa] nach 300 h 100 °C Treibstofflagerung | 1,85 | 1,87 | 1,5 - 2,0 |
| Dehnung [%] nach 300 h 100 °C Treibstofflagerung | 252 | 257 | 300 - 400 |
| Zugfestigkeit [MPa] nach 1000 h 35 °C Wasserlagerung | 1,91 | 1,89 | 1,0-1,5 |
| Dehnung [%] nach nach 1000 h 35 °C Wasserlagerung | 298 | 295 | 300 - 400 |

Es ist auch möglich, eine erfindungsgemäße Dichtmasse ohne einen zusätzlichen, sterisch nicht gehinderten Katalysator in der Formulierung zu verwenden, siehe Beispiele 6 und 7 (B3 und B4). Tabelle 8 beschreibt die Zusammensetzung dieser Beispiele und Tabelle 9 die gemessenen Eigenschaften. Hierbei ist deutlich zu erkennen, dass die Dichtmasse ohne den zusätzlichen, sterisch nicht gehinderten Katalysator deutlich langsamer härtet.

Insgesamt können die hochwertigen Eigenschaften der konventionellen Flugzeugdichtmassen wie die hohe Beständigkeit gegen verschiedene Medien wie z.B. Treibstoffbeständigkeit bei 60 °C z.B. gemessen nach 168 Stunden und 100 °C z.B. Wasserbeständigkeit bei 35 °C gemessen nach 1000 Stunden, Hydraulikflüssigkeit, Kondenswasser und Enteisungsflüssigkeit, hohe Temperaturbeständigkeit, hohe Kälteflexibilität, hohe Witterungsbeständigkeit, hoher Schälwiderstand auf unterschiedlichen Substraten, hohe Bruchdehnung und hohe Zugfestigkeit hierbei trotz der stark verkürzten Aushärtung weitgehend oder in vollem Umfang erreicht werden.

**Tabelle 8: Zusammensetzung von B3 und B4**

| **Gehalt in Gew.-% / Beispiel** | **B3** | **B4** |
|---|---|---|
| **Grundmasse** | | |
| Polythioethersulfid 1 (3500 - 4400 g/mol) | 50,1 | 49,6 |
| Polythioethersulfid 2 (1500 - 2400 g/mol) | 15,8 | 15,8 |
| Photoinitiator 3 | 2,3 | 2,3 |
| Tris-(Dimethylaminomethyl-phenol) | 0,0 | 0,5 |
| Photosensibilisator: Benzophenon | 1,0 | 1,0 |
| Füllstoff Magnesiumsilicalhydrat | 24,3 | 24,3 |
| Haftvermittler Phenolharz | 1,6 | 1,6 |
| Thixotropiermittel Sepiolith | 2,4 | 2,4 |
| Alterungsschutzmittel Phosphorigsäureester | 2,1 | 2,1 |
| Summe | 100 | 100 |

| **Härter** | | |
|---|---|---|
| Bisphenol F-Epoxidharz | 80,2 | 80,2 |
| 1,4-Butandioldiglycidylether | 17,6 | 17,6 |
| Pyrogene Kieselsäure | 2,2 | 2,2 |
| Summe | 100 | 100 |
| Mischungsverhältnis Grundmasse : Härter | 100:6 | 100:6 |

**Tabelle 9: Eigenschaften von B3 und B4**

| **Eigenschaften / Beispiel** | **B3** | **B4** |
|---|---|---|
| Verarbeitungszeit [min] | 120 | 20 |
| Klebfreie Zeit [min] | 5 | 5 |
| Durchhärtezeit f. Anfangshärte Shore A 30 [min] | 490 | 30 |
| Shore A-Härte nach 7 Tagen RT | 45 | 46 |
| Zugfestigkeit [MPa] nach 7 Tagen RT | 1,76 | 1,80 |
| Dehnung [%] nach 7 Tagen RT | 357 | 345 |

## Patentansprüche

1. Dichtmasse zum Beschichten eines Substrats, **dadurch gekennzeichnet, dass**
sie eine Mischung aus einer überwiegend ungehärteten Grundmasse und einem Härter mit einem Gehalt an mindestens einer Epoxidverbindung ist,
die Grundmasse ein mercaptoterminiertes Basispolymer auf Basis von Polyether, Polythioether, Polythioethersulfid, Polysulfid, deren Copolymeren und/oder deren Mischungen enthält,
die Grundmasse, der Härter oder beide mindestens einen Photoinitiator auf Basis einer sterisch gehinderten stickstoffhaltigen organischen Base enthalten, und
der mindestens eine Photoinitiator beim Einwirken von energiereicher aktinischer Strahlung mindestens ein Radikal pro Molekül auf Basis eine stickstoffhaltigen organischen Base abspaltet, aus dem eine stickstoffhaltige organische Base mit einem pKs-Wert der konjugierten Säure im Bereich von 6 bis 30 gebildet wird, welche als aktiver Katalysator für die Härtung der Grundmasse wirkt.

2. Dichtmasse nach Anspruch 1, **dadurch gekennzeichnet, dass** sie eine klebfreie Zeit entsprechend DIN 65262-1 im Bereich von 0,01 bis 10 Minuten nach Beginn einer energiereichen aktinischen Bestrahlung aufweist.

3. Dichtmasse nach Anspruch 1 oder 2, **dadurch gekennzeichnet, dass** die Grundmasse im Wesentlichen auf mindestens einer flüssigen Polythioether-Verbindung basiert, die an den Enden der Moleküle jeweils eine Mercaptogruppe trägt und gegebenenfalls bis zu etwa 50 mol-% Disulfidgruppen innerhalb des Moleküls enthält (Polythioethersulfid).

4. Dichtmasse nach Anspruch 3, **dadurch gekennzeichnet, dass** die Grundmasse zusätzlich zu der mindestens einen flüssigen Polythioether-Verbindung mindestens ein Polysulfid in einem Anteil an der Grundmasse von bis zu 80 Gew.-% enthält.

5. Dichtmasse nach einem der vorhergehenden Ansprüche, **dadurch gekennzeichnet, dass** als Basispolymer mercaptoterminierte Polysulfidpolymere und/oder mercaptoterminierte Polythioether und/oder mercaptoterminierte Polythioethersulfide eingesetzt werden, welche einerseits langkettige Polymere mit einem Molekulargewicht insbesondere im Bereich von 2500 bis 6000 g/mol, besonders bevorzugt im Bereich von 3300 bis 5000 g/mol und andererseits kurzkettige Polymere mit einem Molekulargewicht insbesondere im Bereich von 500 bis 2500 g/mol, besonders bevorzugt im Bereich von 800 bis 1500 g/mol enthalten, wobei das Verhältnis der langkettigen Polymere zu den kurzkettigen Polymeren vorzugsweise im Bereich von 25 : 1 bis 0,5 : 1, von 20 : 1 bis 2 : 1 oder von 14 : 1 bis 8 : 1 liegt.

6. Dichtmasse nach einem der vorhergehenden Ansprüche, **dadurch gekennzeichnet, dass** das Basispolymer einen Mercaptangehalt bezogen auf die reaktiven SH-Gruppen zum gesamten Basispolymer im Bereich von 0,5 bis 10 Gew.-%, von 0,8 bis 8 Gew.-% oder von 1,2 bis 7 Gew.-%, einen Gesamt-Schwefelgehalt im Bereich von 1 bis 50 Gew.-%, von 5 bis 45 Gew.-% oder von 12 bis 36 Gew.-% und eine mittlere Funktionalität als reaktive Endgruppen von Mercaptogruppen pro Molekül im Bereich von 1,5 bis 2,5 oder von 1,9 bis 2,2 aufweist.

7. Dichtmasse nach einem der vorhergehenden Ansprüche, **dadurch gekennzeichnet, dass** die mindestens eine Epoxidverbindung eine solche auf Basis von Epoxy-Novolak-Harzen, auf Basis von Bisphenol A-Epoxidharzen und/oder auf Basis von Bispenol F-Epoxidharzen ist.

8. Dichtmasse nach Anspruch 7, **dadurch gekennzeichnet, dass** die mindestens eine Epoxidverbindung eine solche auf Basis von Bisphenol A-Epoxidharzen mit einem Epoxid-Äquivalentgewicht im Bereich von 170 bis 200 g/eq, auf Basis von Bisphenol F-Harz mit einem Epoxid-Äquivalentgewicht im Bereich von 150 bis 180 g/eq und/oder auf Basis von Epoxid-Novolak-Harzen mit einem Epoxid-Äquivalentgewicht im Bereich von 160 bis 220 g/eq ist.

9. Dichtmasse nach einem der vorhergehenden Ansprüche, **dadurch gekennzeichnet, dass** die mindestens eine Epoxidverbindung 1,4-Butandioldiglycidylether, 2-Ethyl-hexyl-glycidylether und/oder 1,6-Hexandioldiglycidylether (Reaktiwerdünner) enthält.

10. Dichtmasse nach einem der vorhergehenden Ansprüche, **dadurch gekennzeichnet, dass** ein molarer Überschuss an Epoxidverbindung im Bereich von 1,05 bis 2 im Vergleich zu 1 Mol reaktiver SH-Gruppen in Bezug auf den Gesamtgehalt an mercaptoterminiertem Basispolymer vorliegt.

11. Dichtmasse nach einem der vorhergehenden Ansprüche, **dadurch gekennzeichnet, dass** der pKs-Wert der konjugierten Säure der stickstoffhaltigen organischen Base, welche als aktiver Katalysator für die Härtung der Grundmasse wirkt, im Bereich von 7 bis 28, bevorzugt von 8 bis 26, besonders bevorzugt im Bereich von 9 bis 20 und ganz besonders bevorzugt im Bereich von 10 bis 15 liegt.

12. Dichtmasse nach einem der vorhergehenden Ansprüche, **dadurch gekennzeichnet, dass** der der mindestens eine Photoinitiator ein sterisch gehindertes tertiäres Amin, ein sterisch gehindertes Amidin und/oder ein sterisch gehindertes Guanidin ist.

13. Dichtmasse nach Anspruch 12, **dadurch gekennzeichnet, dass** der mindestens eine Photoinitiator in einer Menge zugesetzt wird, die einem Anteil im Bereich von 0,05 bis 5 Gew.-%, bevorzugt im Bereich von 0,1 bis 4 Gew.-% und besonders bevorzugt im Bereich von 1 bis 3 Gew.-% an tertiärer Aminund/oder Amidin- und/oder Guanidin-Verbindung in Bezug auf die Dichtmasse entspricht.

14. Dichtmasse nach Anspruch 12 oder 13, **dadurch gekennzeichnet, dass** der mindestens eine Photoinitiator ein photolatentes 1,5-Diazabicyclo[4.3.0]non-5-en (DBN), ein photolatentes 1,8-Diazabicyclo [5.4.0]undec-7-en (DBU), ein photolatentes TMG (Tetramethylguanidin) und/oder ein photolatentes Triethylendiamin (1,4-Diazabicyclo[2.2.2]octan) ist.

15. Dichtmasse nach einem der vorhergehenden Ansprüche, **dadurch gekennzeichnet, dass** sie einen zusätzlichen, freien Katalysator, der vorzugsweise eine freie stickstoffhaltige organische Base mit einem pKs-Wert der konjugierten Säure im Bereich von 6 bis 30, besonders bevorzugt ein freies tertiäres Amin und/oder freies Amidin und/oder freies Guanidin ist, für die Tiefenhärtung enthält.

16. Dichtmasse nach Anspruch 15, **dadurch gekennzeichnet, dass** der freie Katalysator 1,4-Dimethylpiperazin, N-Methylmorpholin, 2,2'-Dimorpholinodiethylether, Tris-(Dimethylaminomethyl-phenol), Triethylendiamin und/oder TMG, bevorzugt Triethylendiamin und/oder TMG ist.

17. Dichtmasse nach einem der vorhergehenden Ansprüche, **dadurch gekennzeichnet, dass** sie einen Photosensibilisator enthält, um die Absorptionswellenlänge(n) der Dichtmasse spezifisch einzustellen.

18. Verfahren zum Beschichten eines Substrats mit einer Dichtmasse, **dadurch gekennzeichnet, dass** ein Substrat mit einer Dichtmasse nach einem der vorhergehenden Ansprüche beschichtet, die Dichtmasse mit energiereicher aktinischer Strahlung bestrahlt wird und die Dichtmasse anschließend aushärtet.

19. Verfahren nach Anspruch 18, **dadurch gekennzeichnet, dass** die energiereiche aktinische Strahlung eine Wellenlänge im Bereich von 315 bis 600 nm aufweist.

20. Verfahren nach einem der Ansprüche 18 oder 19, **dadurch gekennzeichnet, dass** bei Raumtemperatur oder bei einer Temperatur im Bereich von 10 bis 40, bevorzugt im Bereich von 15 bis 30 °C gehärtet wird.

21. Luftfahrzeug enthaltend Komponenten, die mit einer Dichtmasse nach einem der Ansprüche 1 bis 17 abgedichtet sind.

22. Verwendung der Dichtmasse nach einem der Ansprüche 1 bis 17 für den Bau und für die Instandhaltung von Luft- und Raumfahrzeugen, von Automobilen und Schienenfahrzeugen, im Schiffsbau, im Apparate- und Maschinenbau, im Bauwesen sowie als Gießharz oder für die Herstellung von Gießharzen für die Elektrotechnik und Elektronik.

23. Verwendung des Verfahrens nach einem der Ansprüche 18 bis 20 in der Transportindustrie wie z.B. im Automobilbau, im Schienenfahrzeugbau, im Schiffsbau, im Luftfahrzeugbau oder im Raumfahrzeugbau, im Apparate- und Maschinenbau, im Bauwesen oder für die Herstellung von Möbeln.

## Claims

1. A sealant for coating a substrate, **wherein**
it is a mixture of a predominantly uncured base composition and a curing agent containing at least one epoxide compound,
the base composition comprises a mercapto-terminated base polymer based on polyether, polythioether, polythioether sulfide, polysulfide, copolymers thereof and/or mixtures thereof,
the base composition, the curing agent or both comprise at least one photoinitiator based on a sterically hindered, nitrogen-containing organic base, and
the at least one photoinitiator on exposure to high-energy actinic radiation gives off at least one radical per molecule based on a nitrogen-containing organic base, from which a nitrogen-containing organic base is formed that has a pKa of the conjugate acid in the range from 6 to 30, which acts as active catalyst for the curing of the base composition.

2. The sealant according to claim 1, **wherein** it has a tack-free time in accordance with DIN 65262-1 in the range from 0.01 to 10 minutes after the start of high-energy actinic irradiation.

3. The sealant according to claim 1 or 2, **wherein** the base composition is based substantially on at least one liquid polythioether compound which carries a mercapto group at each of the ends of the molecules and optionally contains up to about 50 mol% of disulfide groups within the molecule (polythioether sulfide).

4. The sealant according to claim 3, **wherein** the base composition, in addition to the at least one liquid polythioether compound, comprises at least one polysulfide in a fraction of up to 80 wt% of the base composition.

5. The sealant according to any of the preceding claims, **wherein** the base polymer used comprises mercapto-terminated polysulfide polymers and/or mercapto-terminated polythioethers and/or mercapto-terminated polythioether sulfides which comprise firstly long-chain polymers having a molecular weight more particularly in the range from 2500 to 6000 g/mol, more preferably in the range from 3300 to 5000 g/mol, and on the other hand short-chain polymers having a molecular weight more particularly in the range from 500 to 2500 g/mol, more preferably in the range from 800 to 1500 g/mol, the ratio of the long-chain polymers to the short-chain polymers being preferably in the range from 25:1 to 0.5:1, from 20:1 to 2:1 or from 14:1 to 8:1.

6. The sealant according to any of the preceding claims, **wherein** the base polymer has a mercaptan content, based on the reactive SH groups relative to the total base polymer, in the range from 0.5 to 10 wt%, from 0.8 to 8 wt% or from 1.2 to 7 wt%, a total sulfur content in the range from 1 to 50 wt%, from 5 to 45 wt% or from 12 to 36 wt% and a mean functionality as reactive end groups of mercapto groups per molecule in the range from 1.5 to 2.5 or from 1.9 to 2.2.

7. The sealant according to any of the preceding claims, **wherein** the at least one epoxide compound is one based on epoxy-novolac resins, based on bisphenol A epoxy resins and/or based on bisphenol F epoxy resins.

8. The sealant according to claim 7, **wherein** the at least one epoxide compound is one based on bisphenol A epoxy resins having an epoxide equivalent weight in the range from 170 to 200 g/eq, based on bisphenol F resin having an epoxide equivalent weight in the range from 150 to 180 g/eq and/or based on epoxy-novolac resins having an epoxide equivalent weight in the range from 160 to 220 g/eq.

9. The sealant according to any of the preceding claims, **wherein** the at least one epoxide compound comprises 1,4-butanediol diglycidyl ether, 2-ethylhexyl glycidyl ether and/or 1,6-hexanediol diglycidyl ether (reactive diluent).

10. The sealant according to any of the preceding claims, **wherein** there is a molar excess of epoxide compound in the range from 1.05 to 2 in comparison to 1 mol of reactive SH groups in relation to the total content of mercapto-terminated base polymer.

11. The sealant according to any of the preceding claims, **wherein** the pKa of the conjugate acid of the nitrogen-containing organic base which acts as active catalyst for the curing of the base composition is in the range from 7 to 28, preferably from 8 to 26, more preferably in the range from 9 to 20 and very preferably in the range from 10 to 15.

12. The sealant according to any of the preceding claims, **wherein** the at least one photoinitiator is a sterically hindered tertiary amine, a sterically hindered amidine and/or a sterically hindered guanidine.

13. The sealant according to claim 12, **wherein** the at least one photoinitiator is added in an amount corresponding to a fraction in the range from 0.05 to 5 wt%, preferably in the range from 0.1 to 4 wt% and more preferably in the range from 1 to 3 wt% of tertiary amine and/or amidine and/or guanidine compound in relation to the sealant.

14. The sealant according to claim 12 or 13, **wherein** the at least one photoinitiator is a photolatent 1,5-diazabicyclo[4.3.0]non-5-ene (DBN), a photolatent 1,8-diazabicyclo[5.4.0]undec-7-ene (DBU), a photolatent TMG (tetramethylguanidine) and/or a photolatent triethylenediamine (1,4-diazabicyclo[2.2.2]octane).

15. The sealant according to any of the preceding claims, **wherein** it comprises an additional, free catalyst which is preferably a free, nitrogen-containing organic base having a pKa of the conjugate acid in the range from 6 to 30, more preferably a free tertiary amine and/or free amidine and/or free guanidine, for curing through volume.

16. The sealant according to claim 15, **wherein** the free catalyst is 1,4-dimethylpiperazine, N-methylmorpholine, 2,2'-dimorpholinodiethyl ether, tris(dimethylaminomethylphenol), triethylenediamine and/or TMG, preferably triethylenediamine and/or TMG.

17. The sealant according to any of the preceding claims, **wherein** it comprises a photosensitizer for specific adjustment of the absorption wavelength(s) of the sealant.

18. A method for coating a substrate with a sealant, **wherein** a substrate is coated with a sealant according to any of the preceding claims, the sealant is irradiated with high-energy actinic radiation, and the sealant subsequently cures.

19. The method according to claim 18, **wherein** the high-energy actinic radiation has a wavelength in the range from 315 to 600 nm.

20. The method according to either of claims 18 and 19, **wherein** curing is carried out at room temperature or at a temperature in the range from 10 to 40, preferably in the range from 15 to 30°C.

21. An aircraft comprising components sealed with a sealant according to any of claims 1 to 17.

22. The use of the sealant according to any of claims 1 to 17 for the construction and the maintenance of aircraft and spacecraft, of automobiles and rail vehicles, in shipbuilding, in the construction of apparatus and machinery, in the building sector, and also as casting resin or for producing casting resins for the electrical and electronics sectors.

23. The use of the method according to any of claims 18 to 20 in the transport industry, such as in automobile construction, in the construction of rail vehicles, in shipbuilding, in aircraft construction or in spacecraft construction, in the construction of apparatus and machinery, in the building sector or for producing furniture.

## Revendications

1. Masse d'étanchéité pour le revêtement d'un substrat, **caractérisée en ce que**
elle est un mélange d'une masse de base majoritairement non durcie et d'un agent de durcissement comportant une teneur en au moins un composé de type époxyde,
la masse de base contient un polymère de base terminé par mercapto à base de polyéther, polythioéther, poly(sulfure de thioéther), polysulfure, leurs copolymères et/ou leurs mélanges,
la masse de base, l'agent de durcissement ou les deux contiennent au moins un photoinitiateur à base d'une base organique contenant de l'azote stériquement encombrée, et
l'au moins un photoinitiateur libère au moins un radical par molécule à base d'une base organique contenant de l'azote sous l'action d'un rayonnement actinique riche en énergie, à partir duquel une base organique contenant de l'azote dotée d'une valeur de pKs de l'acide conjugué dans la plage de 6 à 30 est formée, qui agit comme catalyseur actif pour le durcissement de la masse de base.

2. Masse d'étanchéité selon la revendication 1, **caractérisée en ce qu'**elle présente une durée sans propriété adhésive selon la norme DIN 65262-1 dans la plage de 0,01 à 10 minutes après le début d'une irradiation actinique riche en énergie.

3. Masse d'étanchéité selon la revendication 1 ou 2, **caractérisée en ce que** la masse de base est essentiellement à base d'au moins un composé de type polythioéther liquide, qui porte au niveau des terminaisons des molécules à chaque fois un groupe mercapto et éventuellement contient jusqu'à environ 50 % en moles de groupes disulfure à l'intérieur de la molécule (poly(sulfure de thioéther)).

4. Masse d'étanchéité selon la revendication 3, **caractérisée en ce que** la masse de base contient outre l'au moins un composé de type polythioéther liquide au moins un polysulfure en une proportion par rapport à la masse de base allant jusqu'à 80 % en poids.

5. Masse d'étanchéité selon l'une quelconque des revendications précédentes, **caractérisée en ce qu'**en tant que polymère de base, des polymères de polysulfure terminés par mercapto et/ou des polythioéthers terminés par mercapto et/ou des poly(sulfure de thioéther) terminés par mercapto sont utilisés, qui contiennent d'une part des polymères à chaînes longues dotés d'un poids moléculaire en particulier dans la plage de 2 500 à 6 000 g/mole, particulièrement préférablement dans la plage de 3 300 à 5 000 g/mole et d'autre part des polymères à chaînes courtes dotés d'un poids moléculaire en particulier dans la plage de 500 à 2 500 g/mole, particulièrement préférablement dans la plage de 800 à 1 500 g/mole, le rapport des polymères à chaînes longues sur les polymères à chaînes courtes se situant de préférence dans la plage de 25 : 1 à 0,5 : 1, de 20 : 1 à 2 : 1 ou de 14 : 1 à 8 : 1.

6. Masse d'étanchéité selon l'une quelconque des revendications précédentes, **caractérisée en ce que** le polymère de base présente une teneur en mercaptan en termes de groupes SH réactifs par rapport au polymère de base total dans la plage de 0,5 à 10 % en poids, de 0,8 à 8 % en poids ou de 1,2 à 7 % en poids, une teneur totale en soufre dans la plage de 1 à 50 % en poids, de 5 à 45 % en poids ou de 12 à 36 % en poids et une fonctionnalité moyenne en tant que groupes terminaux réactifs de groupes mercapto par molécule dans la plage de 1,5 à 2,5 ou de 1,9 à 2,2.

7. Masse d'étanchéité selon l'une quelconque des revendications précédentes, **caractérisée en ce que** l'au moins un composé de type époxyde en est un à base de résines époxy-novolak, à base de résines de bisphénol A-époxyde et/ou à base de résines de bisphénol F-époxyde.

8. Masse d'étanchéité selon la revendication 7, **caractérisée en ce que** l'au moins un composé de type époxyde en est un à base de résines de bisphénol A-époxyde dotées d'un poids équivalent d'époxyde dans la plage de 170 à 200 g/éq, à base de résine de bisphénol F dotée d'un poids équivalent d'époxyde dans la plage de 150 à 180 g/éq et/ou à base de résines époxyde-novolak dotées d'un poids équivalent d'époxyde dans la plage de 160 à 220 g/éq.

9. Masse d'étanchéité selon l'une quelconque des revendications précédentes, **caractérisée en ce que** l'au moins un composé de type époxyde contient de l'éther de diglycidyle de 1,4-butanediol, de l'éther de glycidyle de 2-éthyl-hexyle et/ou de l'éther de diglycidyle de 1,6-hexanediol (diluant réactif).

10. Masse d'étanchéité selon l'une quelconque des revendications précédentes, **caractérisée en ce qu'**un excès molaire de composé de type époxyde est présent dans la plage de 1,05 à 2 par rapport à 1 mole de groupes SH réactifs en ce qui concerne la teneur totale en polymère de base terminé par mercapto.

11. Masse d'étanchéité selon l'une quelconque des revendications précédentes, **caractérisée en ce que** la valeur de pKs de l'acide conjugué de la base organique contenant de l'azote, qui agit comme catalyseur actif pour le durcissement de la masse de base, se situe dans la plage de 7 à 28, préférablement de 8 à 26, particulièrement préférablement dans la plage de 9 à 20 et tout particulièrement préférablement dans la plage de 10 à 15.

12. Masse d'étanchéité selon l'une quelconque des revendications précédentes, **caractérisée en ce que** l'au moins un photoinitiateur est une amine tertiaire stériquement encombrée, une amidine stériquement encombrée et/ou une guanidine stériquement encombrée.

13. Masse d'étanchéité selon la revendication 12, **caractérisée en ce que** l'au moins un photoinitiateur est ajouté en une quantité qui correspond à une proportion dans la plage de 0,05 à 5 % en poids, préférablement dans la plage de 0,1 à 4 % en poids et particulièrement préférablement dans la plage de 1 à 3 % en poids de composé de type amine tertiaire et/ou de composé de type amidine et/ou de composé de type guanidine par rapport à la masse d'étanchéité.

14. Masse d'étanchéité selon la revendication 12 ou 13, **caractérisée en ce que** l'au moins un photoinitiateur est un 1,5-diazabicyclo[4.3.0]non-5-ène (DBN) photolatent, un 1,8-diazabicyclo[5.4.0]undéc-7-ène (DBU) photolatent, une TMG (tétraméthylguanidine) photolatente et/ou une triéthylènediamine (1,4-diazabicyclo[2.2.2]octane) photolatente.

15. Masse d'étanchéité selon l'une quelconque des revendications précédentes, **caractérisée en ce qu'**elle contient un catalyseur libre, supplémentaire, qui est de préférence une base organique libre contenant de l'azote dotée d'une valeur de pKs de l'acide conjugué dans la plage de 6 à 30, particulièrement préférablement une amine tertiaire libre et/ou une amidine libre et/ou une guanidine libre, pour le durcissement en profondeur.

16. Masse d'étanchéité selon la revendication 15, **caractérisée en ce que** le catalyseur libre est la 1,4-diméthylpipérazine, la N-méthylmorpholine, le 2,2'-dimorpholinodiéthyléther, le tris-(diméthylaminométhyl-phénol), la triéthylènediamine et/ou la TMG, préférablement la triéthylènediamine et/ou la TMG.

17. Masse d'étanchéité selon l'une quelconque des revendications précédentes, **caractérisée en ce qu'**elle contient un photosensibilisateur, afin d'ajuster spécifiquement la ou les longueurs d'onde d'absorption de la masse d'étanchéité.

18. Procédé pour le revêtement d'un substrat avec une masse d'étanchéité, **caractérisé en ce qu'**un substrat est revêtu avec une masse d'étanchéité selon l'une quelconque des revendications précédentes, la masse d'étanchéité est irradiée avec un rayonnement actinique riche en énergie et la masse d'étanchéité durcit ensuite.

19. Procédé selon la revendication 18, **caractérisé en ce que** le rayonnement actinique riche en énergie présente une longueur d'onde dans la plage de 315 à 600 nm.

20. Procédé selon l'une quelconque des revendications 18 et 19, **caractérisé en ce qu'**on durcit à température ambiante ou à une température dans la plage de 10 à 40, préférablement dans la plage de 15 à 30 °C.

21. Aéronef contenant des composants qui sont étanchéifiés avec une masse d'étanchéité selon l'une quelconque des revendications 1 à 17.

22. Utilisation de la masse d'étanchéité selon l'une quelconque des revendications 1 à 17 pour la construction et pour la maintenance d'aéronefs et de vaisseaux spatiaux, d'automobiles et de véhicules ferroviaires, dans la construction navale, dans la construction d'appareils et la construction de machines, dans le bâtiment ainsi qu'en tant que résine coulée ou pour la préparation de résines coulées pour l'électrotechnique et l'électronique.

23. Utilisation du procédé selon l'une quelconque des revendications 18 à 20 dans l'industrie des transports comme par exemple dans la construction automobile, dans la construction de véhicule ferroviaire, dans la construction navale, dans la construction d'aéronefs ou dans la construction de vaisseau spatiaux, dans la construction d'appareils et dans la construction de machines, dans le bâtiment ou pour la fabrication de meubles.
